(19) Europäisches Patentamt
European Patent Office
Office européen des brevets

(11) EP 0 986 590 B1

(12) **FASCICULE DE BREVET EUROPEEN**

(45) Date de publication et mention de la délivrance du brevet:
**21.01.2004 Bulletin 2004/04**

(21) Numéro de dépôt: **99910450.8**

(22) Date de dépôt: **29.03.1999**

(51) Int Cl.[7]: **C08F 228/02**, G02B 1/04

(86) Numéro de dépôt international:
**PCT/FR1999/000726**

(87) Numéro de publication internationale:
**WO 1999/051652 (14.10.1999 Gazette 1999/41)**

(54) **COMPOSITION POLYMERISABLE POUR LA FABRICATION DE LENTILLE OPTIQUE A HAUT INDICE DE REFRACTION ET HAUT NOMBRE D'ABBE, ET LENTILLE OBTENUE**

POLYMERISIERBARE ZUSAMMENSETZUNG FÜR DIE HERSTELLUNG VON OPTISCHEN LINSEN MIT HOHEM BRECHUNGSINDEX UND EINER HOHEN "ABBE-ZAHL" UND SO HERGESTELLTE LINSE

POLYMERISABLE COMPOSITION FOR MAKING OPTICAL LENS WITH HIGH REFRACTIVE INDEX AND HIGH ABBE NUMBER, AND RESULTING LENS

(84) Etats contractants désignés:
**DE ES FR GB IT**

(30) Priorité: **03.04.1998 FR 9804190**

(43) Date de publication de la demande:
**22.03.2000 Bulletin 2000/12**

(73) Titulaire: **ESSILOR INTERNATIONAL COMPAGNIE GENERALE D'OPTIQUE**
**94227 Charenton cédex (FR)**

(72) Inventeurs:
- **JIANG, Peiqi**
  **Kawasaki, Kanagawa (JP)**
- **WIDAWSKI, Gilles**
  **F-75011 Paris (FR)**
- **MENDUNI, Gilbert**
  **Shibuya-ku, Tokyo (JP)**

(74) Mandataire: **Catherine, Alain et al**
**Cabinet Harlé & Phélip**
**7, rue de Madrid**
**75008 Paris (FR)**

(56) Documents cités:
**EP-A- 0 394 495**
**WO-A-96/26184**
**WO-A-96/38486**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 986 590 B1

## Description

La présente invention a pour objet de nouvelles compositions polymérisables pour la fabrication de lentilles optiques à haut indice de réfraction et haut nombre d'Abbe et les lentilles optiques, en particulier ophtalmiques, obtenues à partir de ces compositions.

Par lentille optique à haut indice de réfraction, on entend une lentille optique dont l'indice de réfraction est supérieur ou égal à 1,55, et préférentiellement supérieur à 1,57.

De préférence, de nouvelles compositions polymérisables selon l'invention sont utiles dans la fabrication des verres de lunette.

Une lentille ophtalmique à haut indice de réfraction doit posséder l'ensemble des caractéristiques suivantes :

- une transmission élevée (transmission généralement supérieure à 85%, et de préférence supérieure ou égale à 90%), avec une absence ou éventuellement une très faible diffusion de la lumière,
- un nombre d'Abbe élevé, supérieur ou égal à 30, et de préférence supérieur ou égal à 35, afin d'éviter des aberrations chromatiques,
- un faible indice de jaune et une absence de jaunissement au cours du temps,
- une bonne résistance aux chocs (en particulier selon les normes CEN et FDA),
- une bonne aptitude aux traitements divers (dépôt de revêtement dur, antireflet, primaire antichoc, ...), et en particulier une bonne aptitude à la coloration,
- une valeur de température de transition vitreuse de préférence supérieure ou égale à 80°C, et mieux encore supérieure à 90°C, de préférence comprise entre 90 et 110°C.

En outre, les compositions polymérisables doivent être également faciles à mettre en oeuvre sur le plan industriel.

En particulier, il est souhaitable que les compositions polymérisables puissent être polymérisées rapidement, en particulier par photopolymérisation.

Le document de brevet WO 96/38486 décrit des compositions polymérisables pour la fabrication de lentilles optiques à haut indice et haut nombre d'Abbe, comprenant 20 à 60% en poids d'un monomère acrylate ou méthacrylate dérivé d'une oléfine polycyclique, en particulier un dérivé acrylate ou méthacrylate du tricyclodécane, 15 à 60% en poids d'un di- ou polythiol, 5 à 50% en poids d'un monomère divinylique ou polyvinylique dont les groupes vinyliques ne forment pas de groupement (méth)acrylique, et 0 à 20% en poids d'un comonomère polymérisable qui peut être choisi parmi les méthacrylates, acrylates, thiométhacrylates, thioacrylates, vinyles, vinyléthers, allyles, époxydes et analogues.

Bien qu'il soit indiqué que les compositions polymérisables de ce document peuvent être polymérisées thermiquement et/ou par irradiation UV, tous les exemples de réalisation font état d'un durcissement thermique dont la durée est particulièrement longue (8 heures).

Le document de brevet WO 97/44372 décrit une composition polymérisable pour la fabrication de lentilles ophtalmiques, qui comprend 2,5 à 100% d'un monomère cyclique d'ester de divinyle, 5 à 30% en poids d'un monomère di- ou polythiol et, éventuellement, 1 à 40% en poids d'un monomère thiodiacrylate ou diméthacrylate.

La présente invention a donc pour objet une composition de monomères polymérisables pour la fabrication de lentilles opthalmiques à indice de réfraction élevé et haut nombre d'Abbe qui soit aisément polymérisable, en particulier qui soit aisément photopolymérisable.

La composition de monomères polymérisables, selon l'invention, comprend :

**(A)** au moins un monomère polythio(méth)acrylate;
**(B)** au moins un monomère à haut nombre d'Abbe comportant au moins deux groupements polymérisables, de préférence deux à quatre groupements polymérisables, et au moins une unité constitutive cyclique pontée, la ou les unités constitutives cycliques pontées n'étant pas directement liées à un atome d'oxygène;
**(C)** au moins un monomère polythiol; et, facultativement,
**(D)** au moins un autre monomère copolymérisable avec les monomères (A), (B) et (C); la composition étant exempte de tous autres monomères comportant un ou plusieurs groupes fonctionnels vinyliques, autres que des groupes fonctionnels (méth)acryliques et thio(méth) acryliques, et différents des monomères (B).

Par définition, un monomère thio(méth)acrylate est un monomère comportant le groupement

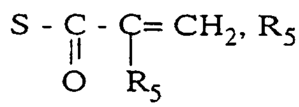

ayant la signification figurant ci-après.

De préférence, le monomère (A) est un dithio(méth)acrylate.

De préférence également, le monomère (A) est un monomère aliphatique.

Une première classe de monomères polythio(méth)acrylates convenant pour les compositions selon l'invention, répondent à la formule :

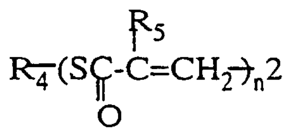 (I)

dans laquelle :

$R_4$ représente un radical hydrocarboné aliphatique, linéaire ou ramifié, monovalent ou polyvalent, ou un groupement aromatique ou hétérocyclique monovalent ou polyvalent directement lié à l'atome de soufre du ou des groupements thio(méth)acrylates par un noyau ou par l'intermédiaire d'une chaîne alkyle linéaire, le radical $R_4$ pouvant comporter dans sa chaîne un ou plusieurs groupes choisis parmi -O-, -S-,

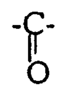 ;

$R_5$ représente l'hydrogène ou $-CH_3$; et
$n^2$ est un entier de 1 à 6, de préférence de 1 à 3.

Parmi les radicaux $R_4$ monovalents, on peut citer les radicaux alkyle, linéaires ou ramifiés, de $C_1$ à $C_5$, les radicaux de formule :

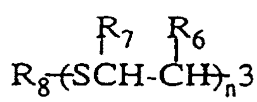 ,

dans laquelle :

$R_6$ et $R_7$ sont, indépendamment les uns des autres, H ou un radical alkyle, linéaire ou ramifié en $C_1$-$C_5$;
$R_8$ est un radical alkyle, linéaire ou ramifié en $C_1$-$C_5$, un radical aralkyle en $C_7$-$C_{10}$ ou un radical aryle en $C_6$-$C_{12}$, éventuellement substitué, en particulier par des groupes alkyle et/ou halogène; et
$n^3$ est un entier de 1 à 4.

Parmi les radicaux $R_4$ monovalents préférés, on peut citer :

$C_2H_5SCH_2CH_2$- ;

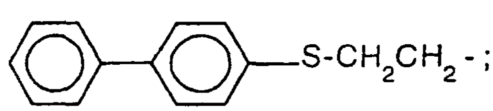

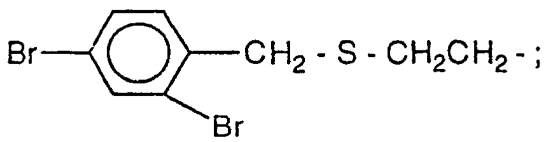

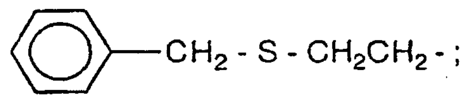

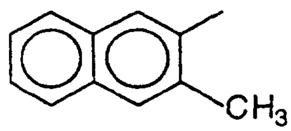

Des monomères de formule (I) pour lesquels $n^2$=1 et tels que définis ci-dessus, sont décrits, entre autres, dans les brevets US-A-4606864, JP-63316766 et EP-A-0384725.

Parmi les radicaux $R_4$ divalents entrant dans le cadre des monomères de formule (I), on peut citer les radicaux alkylène, linéaires ou ramifiés, en $C_2$ à $C_{10}$ pouvant comporter dans leur chaîne un ou plusieurs groupes -O-, -S- ou

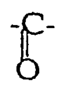 ,

les radicaux alkylidène de formule

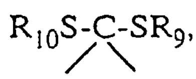,

dans laquelle $R_9$ et $R_{10}$ sont des radicaux alkyle en $C_1$-$C_5$, les radicaux de formule :

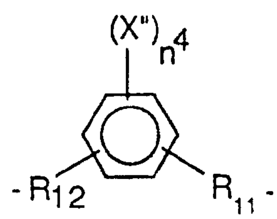

dans laquelle $R_{11}$ et $R_{12}$ sont des groupes alkylène, linéaires ou ramifiés, en $C_1$-$C_5$ pouvant comporter un ou plusieurs groupes -O-, -S- ou

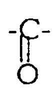

dans leurs chaînes et X" est choisi parmi les radicaux alkyle en $C_1$-$C_5$ et les halogènes, et $n^4$ est un entier de 0 à 4, et les radicaux de formule :

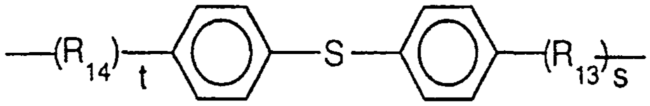

dans laquelle $R_{13}$ et $R_{14}$ sont des radicaux alkyle, linéaires ou ramifiés en $C_1$ à $C_5$, pouvant comporter dans leur chaîne un ou plusieurs groupes -O-, -S- ou

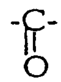

et t et s sont égaux à 0 ou 1.

Parmi les radicaux $R_4$ divalents préférés, on peut citer les radicaux

$$-(CH_2)_{q'}- ,$$

où q' est un entier de 1 à 8 ;

$$-(CH_2CH_2X)_u CH_2CH_2 -$$

où X est -O- ou -S-, et u est un entier de 1 à 4 ;

$$-(CH_2)_{u'} [S(CH_2)_{v'}]_{z'} (CH_2)_{w'}$$

où z' est égal à 0 ou 1, et u', v', w' sont des entiers de 2 à 6 ;

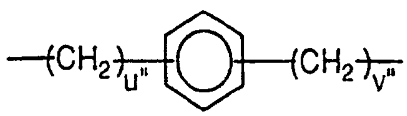

où u" et v" sont des entiers de 1 à 4,

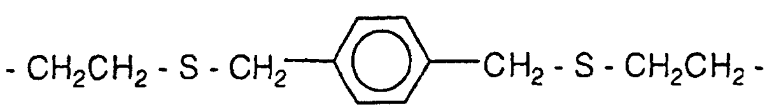

,

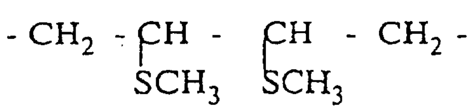

, et

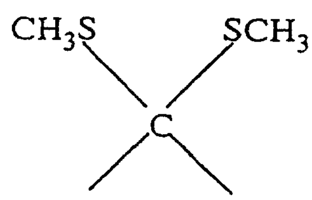

Les radicaux $R_4$ divalents particulièrement préférés sont :

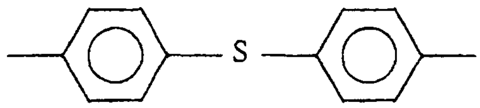

et $-H_4C_2-S-C_2H_4-$

Des monomères de formule (I) divalents sont décrits, entre autres, dans les brevets EP-A-273661, EP-A-273710, EP-A-384725.

Parmi les radicaux $R_4$ trivalents des monomères de formule (I), on peut citer les radicaux alkyltriyle en $C_3$ à $C_{10}$ pouvant comporter dans leur chaîne, un ou plusieurs groupes -O-, -S- ou

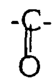

, les radicaux alkylaryle trivalents dont les chaînes alkyle peuvent comporter un ou plusieurs groupes -S- ou -O-, et les groupes aryle trivalents.

Parmi les radicaux $R_4$ trivalents ou de valence supérieure, on peut citer :

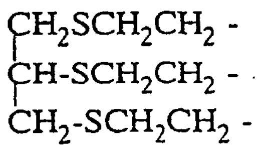 , 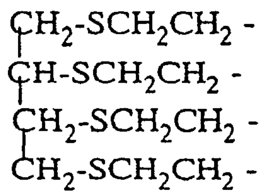 , etc...

Parmi les monomères de formule (I) recommandés dans la présente invention, on peut citer :

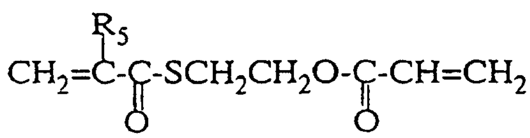

S-2-acryloyloxyéthylthio(méth)acrylate,

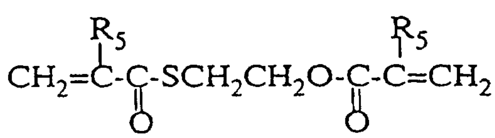

S-2-methacryloyloxyéthylthio(méth)acrylate,

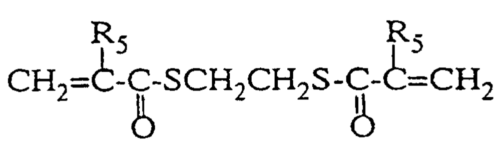

1,2-bis[(méth)acryloylthio]éthane,

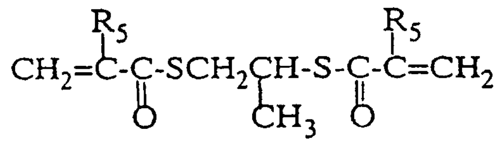

1,2-bis[(méth)acryloylthio]propane,

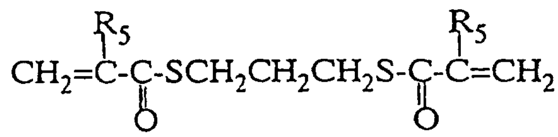

1,3-bis[(méth)acryloylthio]propane,

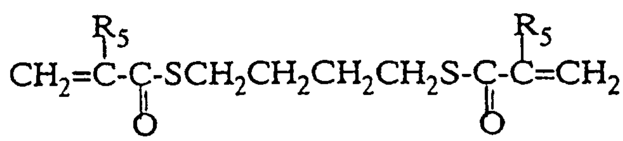

1,4-bis[(méth)acryloylthio]butane,

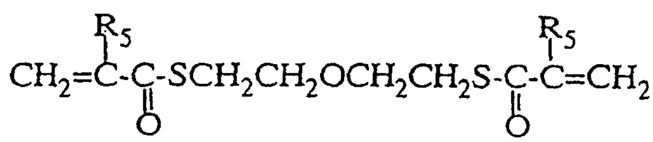

bis-2-[(méth)acryloylthioéthyl]éther,

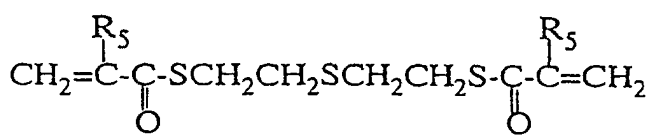

bis-2-[(méth)acryloylthioéthyl]sulfure,

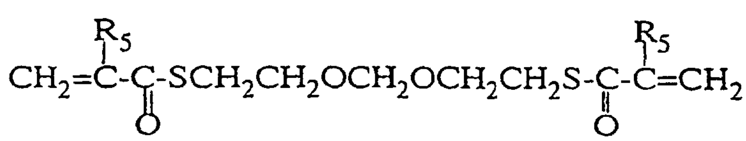

bis-2-[(méth)acryloylthioéthoxy]méthane,

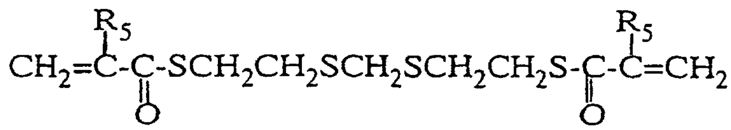

bis-2-[(méth)acryloylthioéthylthio]méthane,

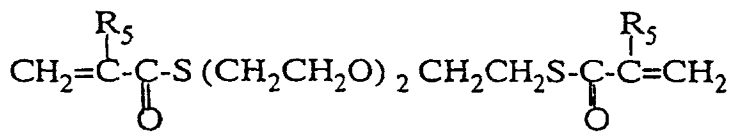

1,2-bis-[2-(méth)acryloylthioéthoxy]éthane,

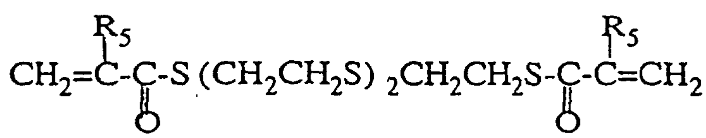

1,2-bis-[2-(méth)acryloylthioéthylthio]éthane,

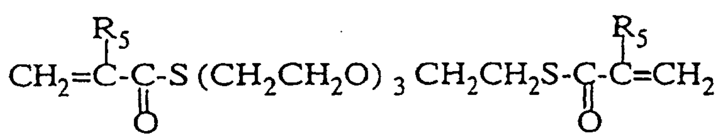

bis-[2-(2-(méth)acryloylthioéthoxy)éthyl]éther,

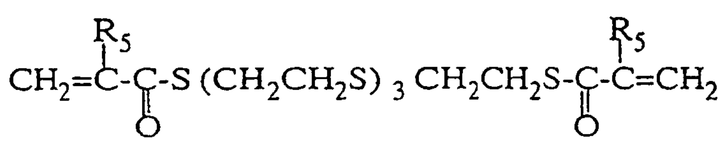

bis-[2-(2-(méth)acryloylthioéthylthio)éthyl]sulfure,

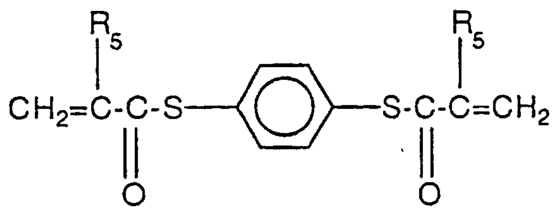

1,4-bis[(méth)acryloylthio]benzène,

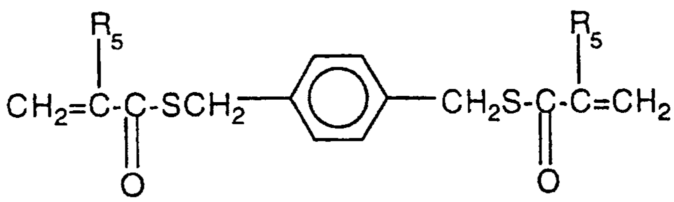

1,4-bis[(méth)acryloylthiométhyl]benzène,

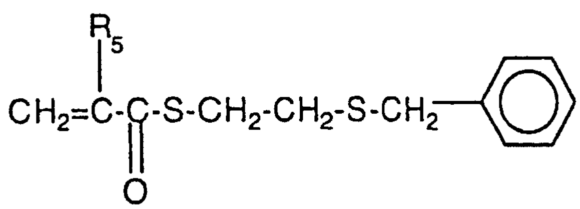

Benzylthioéthylthio(méth)acrylate,

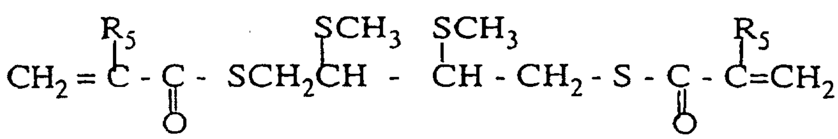

1,4-[bis(méth)acryloylthio]-2,3-diméthylthiobutane,

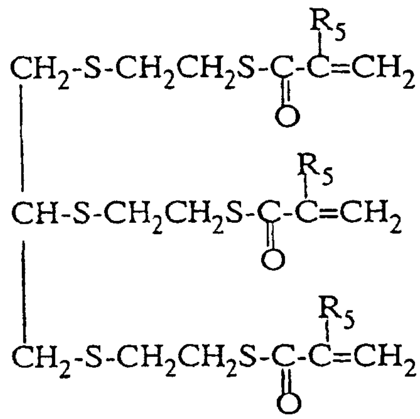

1,2,3-tris[(méth)acryloylthioéthyl]thiolpropane, et

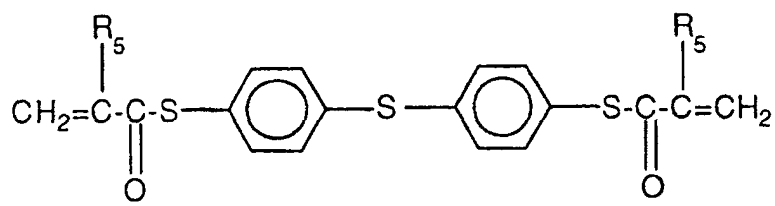

bis[(méth)acryloylthiophényl]sulfure,

où $R_5$ représente un atome d'hydrogène ou un groupe méthyle.

Une autre classe de monomères thio(méth)acryliques convenant dans les compositions de monomères selon l'invention, répondent à la formule :

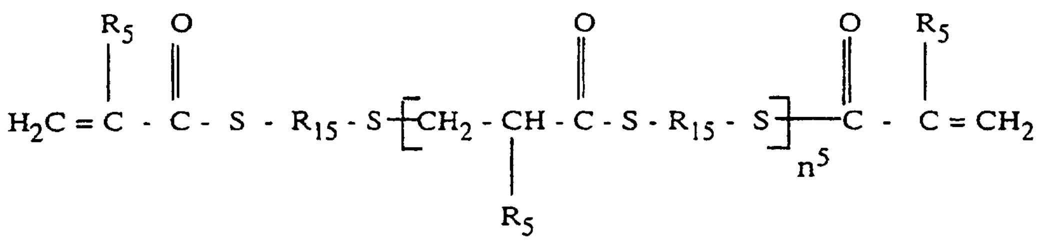 (II)

dans laquelle $R_5$ représente H ou $CH_3$, $R_{15}$ représente un groupe alkylène, éventuellement ramifié, en $C_2$-$C_{12}$, un groupe cycloalkylène en $C_3$-$C_{12}$, un groupe arylène en $C_6$-$C_{14}$ ou un groupe alkarylène en $C_7$-$C_{26}$, la chaîne carbonée du groupe $R_{15}$ pouvant être interrompue par un ou plusieurs groupes éther ou thioéther, et $n^5$ est un entier de 1 à 6.

De tels monomères sont décrits dqns le brevet US 5 384 379.

Un monomère polythiométhacrylate recommandé est le bis(2-méthacryloylthioéthyl)sulfure (BMTES).

Le ou les monomères polythiométhacrylates constituent généralement de 10 à 60% en poids, de préférence 25 à 60% en poids, par rapport au poids total des monomères polymérisables présents dans la composition.

Les monomères B à haut nombre d'Abbe convenant pour les compositions de l'invention sont les monomères comportant au moins deux, de préférence deux à quatre groupements polymérisables et au moins une unité constitutive cyclique pontée, la ou les unités constitutives cycliques pontées n'étant pas directement liées à un atome d'oxygène.

De préférence, les unités constitutives cycliques pontées sont choisies parmi les radicaux norbornényles, dicyclopentényles et leurs dérivés hydrogénés divalents.

Les groupements polymérisables sont de préférence des groupements (méth)acryliques ou thio(méth)acryliques, ou des groupes cycliques pontés comportant une double liaison éthylénique intracyclique ou un reste aliphatique linéaire ou ramifié comportant une insaturation éthylénique, de préférence un groupe vinyle ou éthylidène directement lié à un carbone du cycle.

Les groupes polymérisables cycliques pontés peuvent être choisis parmi les groupes de formule :

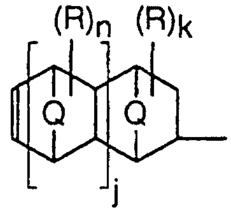

où n est un entier de 0 à 5 inclus, k est un entier de 0 à 3 inclus et j est un entier de 0 à 10 inclus, et

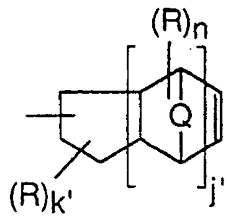

où n est un entier de 0 à 5 inclus, k' un entier de 0 à 2 inclus et j' un entier de 0 à 10 inclus, Q représente un groupe $-C(R')_2-$, -O-, -S-, -NR'- ou $-SO_2-$, avec R' désignant H ou un radical alkyle en $C_1$-$C_3$, de préférence un atome d'hydrogène ou $-CH_3$, et R est un atome d'hydrogène ou un radical alkyle en $C_1$-$C_3$, de préférence $-CH_3$.

Parmi les groupes ci-dessus préférés, on peut citer les groupes de formules :

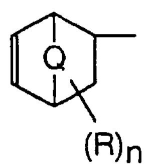

et

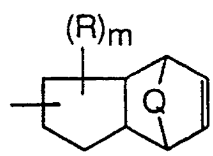

dans lesquelles les radicaux R représentent, indépendamment les uns des autres, un atome d'hydrogène ou un groupement alkyle en $C_1$-$C_3$, par exemple méthyle, de préférence un atome d'hydrogène, et Q est un radical divalent choisi parmi $-C(R')_2-$, -O-, -S-, $-SO_2-$, -NR'-, où R' est un atome d'hydrogène ou un radical alkyle en $C_1$-$C_3$, de préférence un radical méthyle, Q étant de préférence un radical $-CH_2-$, n=0 à 5 et m=0 à 8.

Il va de soi que, lorsque les groupements fonctionnels du monomère B sont des groupes thio(méth)acrylate, les monomères A et B présents dans la composition sont des monomères différents.

De préférence encore, on choisit un monomère à haut nombre d'Abbe dont l'indice de réfraction est d'au moins 1,56.

Une première classe de monomères B à haut nombre d'Abbe est constituée par des monomères comportant des groupes terminaux polymérisables (méth)acryliques ou thio(méth)acryliques comportant dans leurs chaînes une unité constitutive cyclique pontée telle que définie précédemment.

Parmi ces monomères à haut nombre d'Abbe, les monomères recommandés répondent à la formule :

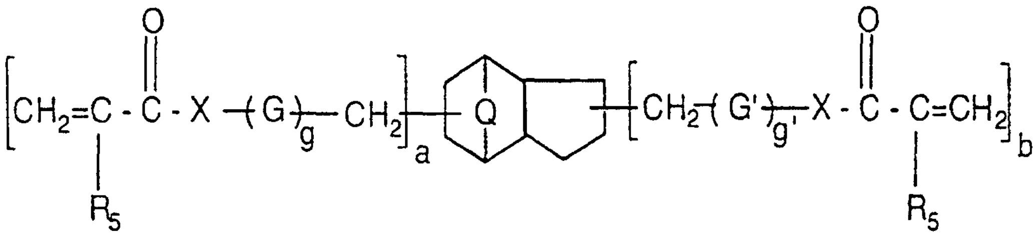 (III)

dans laquelle Q et $R_5$ sont définis comme précédemment, X représente -O- ou -S-, a=1-3, b=1-3, g et g' varient de 0 à 6; G et G' sont des groupes divalents choisis parmi l'un ou plus des groupes suivants :

$-(CH_2)_r-O-$ , 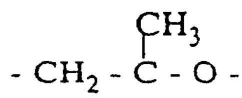 ou $-(CH_2)_r-S-$

dans lesquels r = 1-4 ;

Les composés préférés de cette classe sont les di(méth)acryloyles d'oxyméthyltricyclodécane et les dithio (méth) acryloyles d'oxyméthyltricyclodécane.

Un composé particulièrement recommandé est le composé de formule :

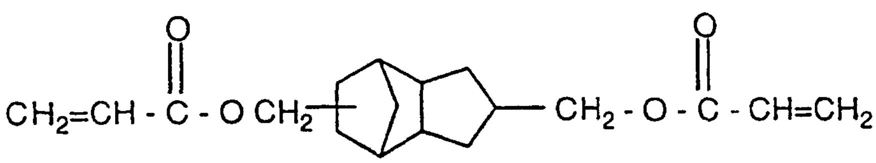 (DCPA)

Des composés répondant à la formule (III) ci-dessus sont décrits dans le document de brevet WO 96/38486.

Une autre classe de monomères B recommandée sont les monomères comportant des groupes terminaux cycliques pontés polymérisables, en particulier des groupes norbornényles et dicyclopentényles.

Plus particulièrement, des composés de cette classe répondent à la formule générale :

$$Z(A)_n a \quad (IV)$$

dans laquelle $n^a$ est un entier de 2 à 4 et A est un radical choisi parmi les radicaux de formules :

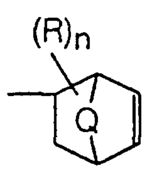 et 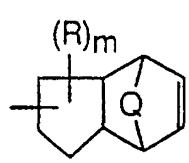

dans lesquelles Q représente $-C(R')_2-$, -O-, -S-, $-SO_2-$ et -NR' -, où R' représente H ou un radical alkyle en $C_1$-$C_3$, R représente l'hydrogène ou un radical alkyle en $C_1$-$C_3$, de préférence $CH_3$, n=0-5 et m=0-8, et

**(I)** lorsque $n^a$=2, Z représente un radical divalent de formule :

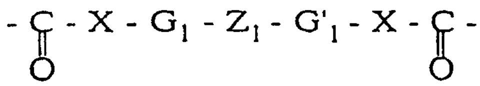 (V),

ou

$$- S - Z_2 - S - \qquad (VI)$$

dans lesquelles X représente -O- ou -S- , $G_1$ et $G'_1$ sont des groupes

$$-(C_{n'}H_{2n'}O)_{m'}-$$

avec n'=1 à 5, de préférence n'=2, et m' varie de 0 à 10, ou un groupe alkylène en $C_1$-$C_5$ ; $Z_1$ est choisi parmi les radicaux divalents de formules :

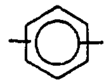, 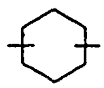, 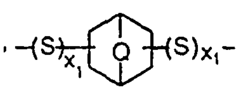, 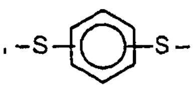, 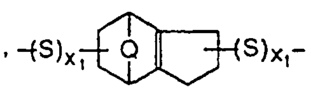,

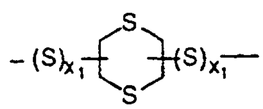, 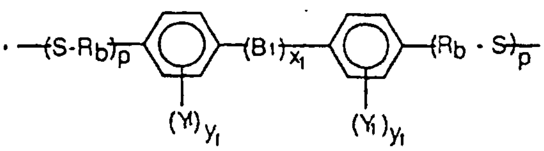,

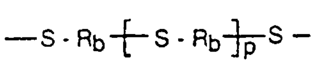, 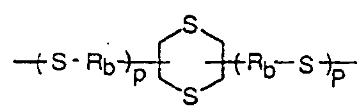 et

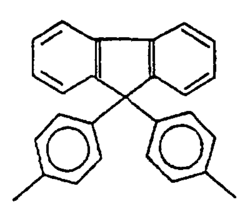

dans lesquelles Q est défini comme ci-dessus, $B_1$ représente - $C(R_2)_2$- ou -S-, et $R_2$ est un radical alkyle en $C_1$-$C_3$, de préférence -$CH_3$, et $x_1$=0 ou 1, $Y_1$ représente, indépendamment les uns des autres, Br, Cl ou H, $y_1$ est un entier de 0 à 4, les groupements $R_b$ désignant, indépendamment les uns des autres, un groupe $-(CH_2)_q-$ et q est un entier de 1 à 4, de préférence égal à 1 ou 2, et p est un entier de 0 à 4, de préférence de 0 à 2; et

$Z_2$ est un radical divalent choisi parmi les radicaux de formules :

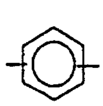, 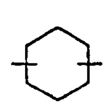, 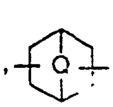, 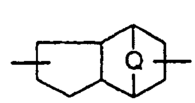, 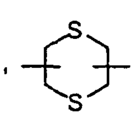, 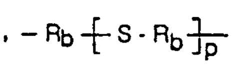

$$-R_b-\left[SR_b\right]_p Z_3-\left[R_bS\right]_p-R_b-$$

où Q, $R_b$ et p sont définis comme ci-dessus et $Z_3$ est un radical divalent choisi parmi :

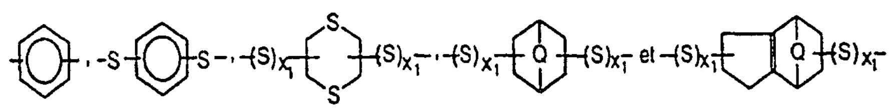

où Q et $x_1$ sont définis comme précédemment ;

**(II)** lorsque $n^a$=3, Z représente un radical trivalent choisi parmi :

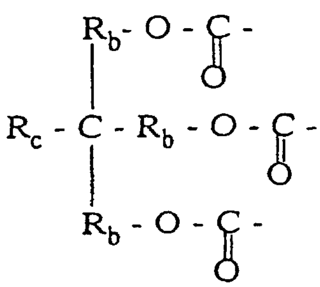

,

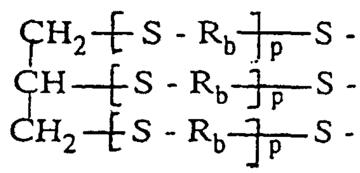

et

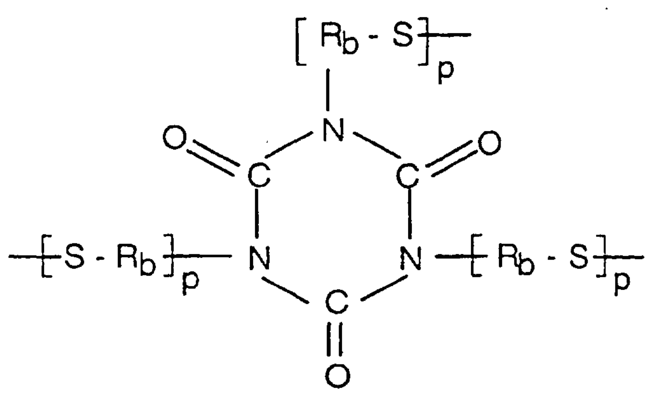

où $R_b$ et p sont définis comme précédemment et $R_c$ représente H ou un groupe alkyle en $C_1$-$C_3$, de préférence $-CH_3$ ; et

**(III)** lorsque $n^a$=4, Z représente un radical tétravalent choisi parmi les radicaux :

$$C-\left[R_3\right]_4$$

où $R_3$ est un radical alkylène en $C_1$-$C_5$ ou un radical

$$-[SR_b-]_p S -$$

où $R_b$ et p sont définis comme précédemment.

Les monomères préférés de cette classe répondent à la formule :

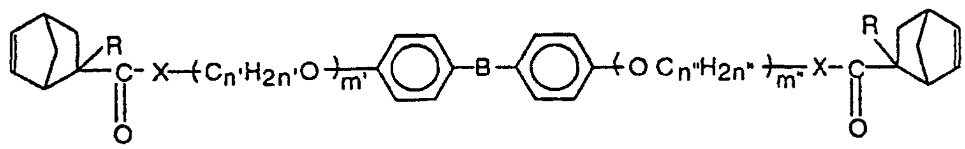

(VII)

où R est H ou $CH_3$, X est -O- ou -S-, B est -S- ou

$$>C(CH_3)_2,$$

n' et n"=1 à 5 et m' et m" varient de 0 à 10. De préférence, $3 \leq m'+m'' \leq 5$ et n' et n" = 2.

Un monomère de ce type particulièrement recommandé est le monomère de formule :

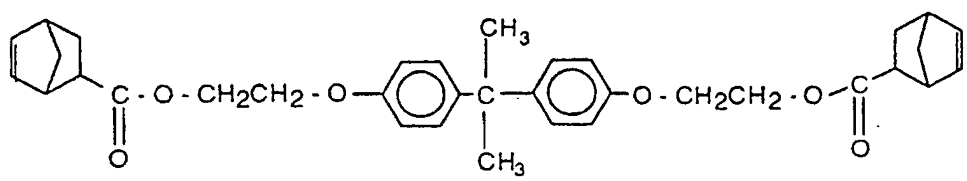

(EBPADN)

Bisphénol A 2 éthoxylé dinorbornène.

Des monomères polymérisables de ce type sont décrits entre autre dans le document de brevet WO 88/02902.

Parmi les monomères à groupes polycycloalcényles terminaux préférés, on peut également citer les monomères de formule :

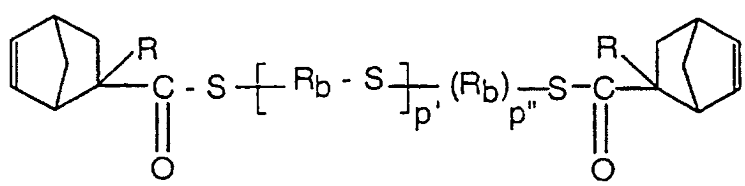

(VIII)

où R=H ou $CH_3$, $R_b$ est tel que défini précédemment, de préférence est un radical propylène, p' est un entier de 1 à 3, de préférence égal à 2 et p" est un entier égal à O ou 1.

Un monomère de formule (VIII) recommandé est le monomère de formule :

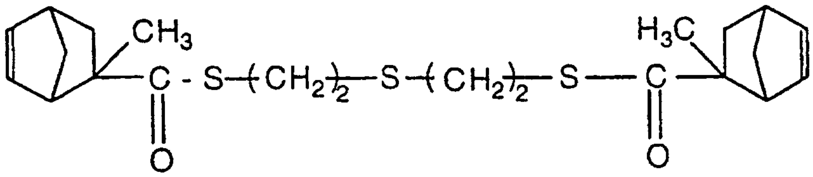

(DTMNSME) ou dithiométhanorbornène de sulfure de mercaptoéthyle.

Parmi les monomères de formule (VI) ci-dessus, on peut citer les monomères pour lesquels $Z_2$ représente les groupes suivants :

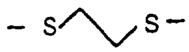

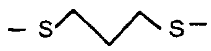

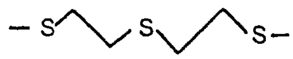

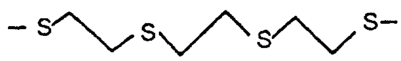

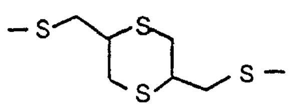

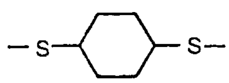

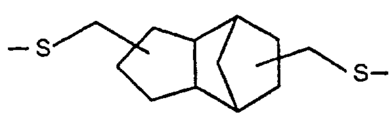

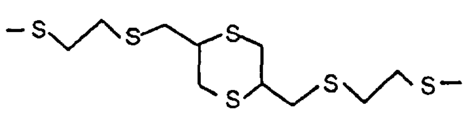

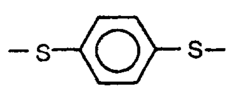

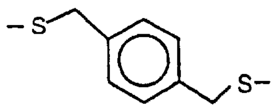

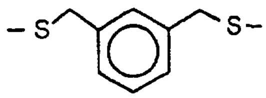

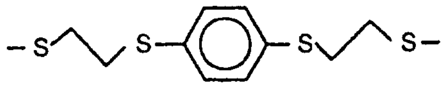

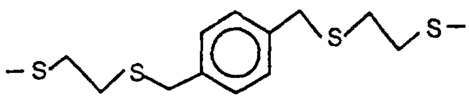

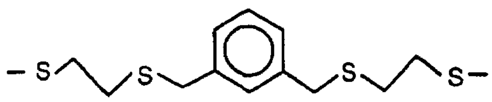

De tels monomères sont décrits ainsi que leur procédé de préparation dans le document de brevet JP-81 51360.

Parmi les constituants monomères trivalents à groupes polycycloalcényle terminaux recommandés, on peut citer les monomères de formules :

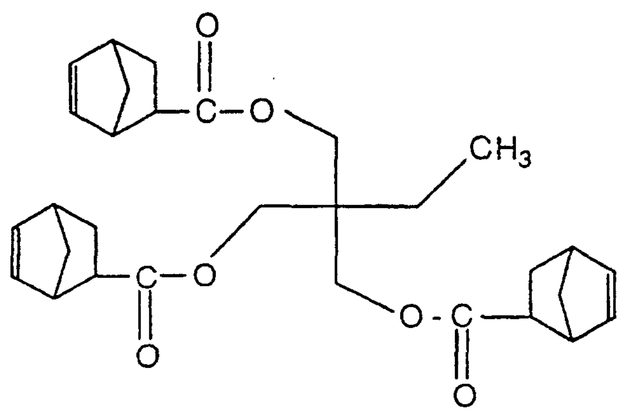

et

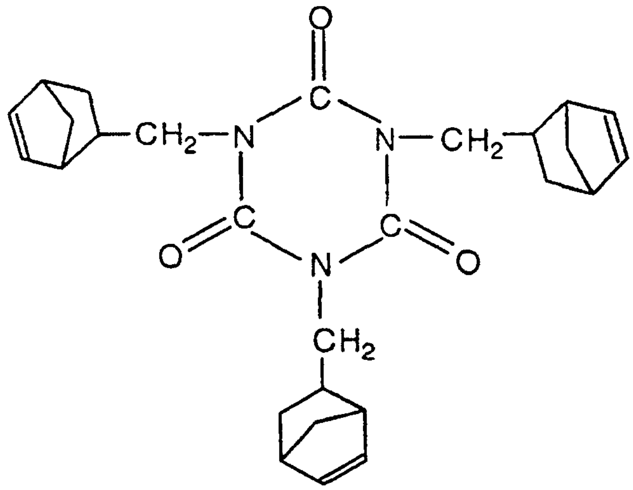

Les monomères polymérisables B représentent 5 à 50%, de préférence 10 à 40% en poids par rapport au poids total des monomères polymérisables présents dans la composition.

Le troisième constituant essentiel des compositions selon l'invention, est un monomère polythiol polymérisable C.

Les monomères polythiols convenant pour les compositions selon la présente invention, sont bien connus dans la technique et peuvent être représentés par la formule $R_1(SH)_n1$, dans laquelle $n^1$ est un entier de 2 ou plus, de préférence de 2 à 5, et $R_1$ est un radical aliphatique, aromatique ou hétérocyclique.

De préférence, le composé polythiol est un composé dithiol, trithiol ou tétrathiol, en particulier un polythiol à nombre d'Abbe élevé.

Ces composés polythiols sont bien connus dans la technique et sont décrits entre autre dans le document EP 394 495.

Parmi les dithiols utiles dans la présente invention, on peut citer le 9,10-anthracènediméthanethiol, le 1,11-undécanedithiol, le 4-éthylbenzène-1,3-dithiol, le 1,2-éthanedithiol, le 1,8-octanedithiol, le 1,18-octadécanedithiol, le 2,5-dichlorobenzène-1,3-dithiol, le 1,3-(4-chlorophényl)propane-2,2-dithiol, le 1,1-cyclohexanedithiol, le 1,2-cyclohexanedithiol, le 1,4-cyclohexanedithiol, le 1,1-cycloheptanedithiol, le 1,1-cyclopentanedithiol, le 4,8-dithioundécane-1,11-dithiol, le dithiopentaérythritol, le dithiothréitol, le 1,3-diphénylpropane-2,2-dithiol, le 1,3-dihydroxy-2-propyl-2',3'-dimercaptopropyléther, le 2,3-dihydroxypropyl-2',3'-dimercaptopropyléther, le 2,6-diméthyloctane-2,6-dithiol, le 2,6-diméthyloctane-3,7-dithiol, le 2,4-diméthylbenzène-1,3-dithiol, le 4,5-diméthylbenzène-1,3-dithiol, le 3,3-diméthylbutane-2,2-dithiol, le 2,2-diméthylpropane-1,3-dithiol, le 1,3-di(4-méthoxyphényl)propane-2,2-dithiol, le 3,4-diméthoxybutane-1,2-dithiol, l'acide 10,11-dimercaptoundécanoïque, l'acide 6,8-dimercapto-octanoïque, le 2,5-dimercapto-1,3,4-thiadiazole, le 2,2'-dimercapto-biphényle, le 4,4'-dimercaptobiphényle, le 4,4'-dimercaptobibenzyle, le 3,4-dimercaptobutanol, le 3,4-dimercaptobutylacétate, le 2,3-dimercapto-1-propanol, le 1,2-dimercapto-1,3-butanediol, l'acide 2,3-dimercaptopropionique, le 1,2-dimercaptopropylméthyléther, le 2,3-dimercaptopropyl-2',3'-diméthoxypropyléther, le 3,4-thiophènedithiol, le 1,10-décanedithiol, le 1,12-dodécanedithiol, le 3,5,5-triméthylhexane-1,1-dithiol, le 2,5-toluènedithiol, le 3,4-toluènedithiol, le 1,4-naphtalènedithiol, le 1,5-naphtalènedithiol, le 2,6-naphtalènedithiol, le 1,9-nonanedithiol, le norbornène-2,3-dithiol, le bis(2-mercaptoisopropyl)éther, le bis(11-mercaptoundécyl)sulfure, le bis (2-mercaptoéthyl)éther, le bis(2-mercaptoéthyl)sulfure, le bis(18-mercaptooctadécyl)sulfure, le bis(8-mercaptooctyl) sulfure, le bis(12-mercaptodécyl)sulfure, le bis(9-mercaptononyl)sulfure, le bis(4-mercaptobutyl)sulfure, le bis(3-mercaptopropyl)éther, le bis(3-mercaptopropyl) sulfure, le bis(6-mercaptohexyl)sulfure, le bis(7-mercaptoheptyl) sulfure, le bis(5-mercaptopentyl)sulfure, l'acide 2,2'-bis(mercaptométhyl)acétique, le 1,1-bis(mercaptométhyl)cyclohexane, le bis (mercaptométhyl)durène, le phénylméthane-1,1-dithiol, le 1,2-butanedithiol, le 1,4-butanedithiol, le 2,3-butanedithiol, le 2,2-butanedithiol, le 1,2-propanedithiol, le 1,3-propanedithiol, le 2,2-propanedithiol, le 1,2-hexanedithiol, le 1,6-hexanedithiol, le 2,5-hexanedithiol, le 1,7-heptanedithiol, le 2,6-heptanedithiol, le 1,5-pentanedithiol, le 2,4-pentanedithiol, le 3,3-pentanedithiol, le 7,8-heptadécanedithiol, le 1,2-benzènedithiol, le 1,3-benzènedithiol, le 1,4-benzènedithiol, le 2-méthylcyclohexane-1,1-dithiol, le 2-méthylbutane-2,3-dithiol, l'éthylène glycol dithioglycolate, l'éthylène glycol bis(3-mercaptopropionate). Parmi les trithiols, on peut citer le 1,2,3-propanetrithiol, le 1,2,4-butanetrithiol, le triméthylolpropanetrithiol glycolate, le triméthylolpropane tris(3-mercaptopropionate), le pentaérythritol trithioglycolate, le pentaérythritol tris(3-mercaptopropionate), le 1,3,5-benzènetrithiol, et le 2,4,6-mésitylènetrithiol.

On peut encore citer parmi les polythiols utiles dans les compositions de la présente invention, le néopentane

tétrathiol, le 2,2'-bis(mercaptométhyl)-1,3-propanedithiol, le pentaérythritol tétrakis(3-mercaptopropionate), le 1,3,5-benzènetrithiol, le 2,4,6-toluènetrithiol, le 2,4,6-méthylènetrithiol, et les polythiols correspondant aux formules :

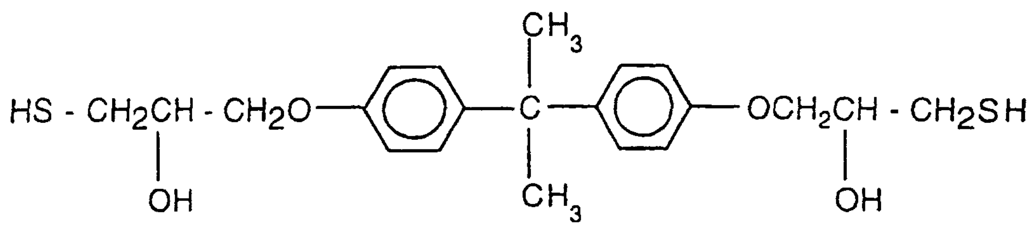

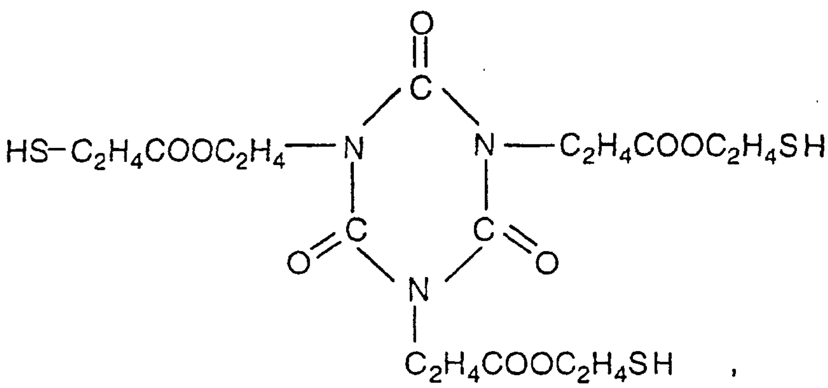

,

$(HS\ CH_2CH_2\ COO\ CH_2)_3\ C\ C_2H_5$ (TTMP),

et

le 4-mercaptométhyl-3,6-dithia-1,8-octanedithiol.

Le monomère polythiol C représente généralement 10 à 60% en poids, de préférence 20 à 50% en poids, par rapport au poids total des monomères polymérisables présents dans la composition.

Les compositions selon l'invention peuvent également comporter d'autres monomères polymérisables D, à l'exception des monomères comportant des groupes fonctionnels vinyliques autres que des groupes (méth)acrylates ou thio(méth)acrylates.

Parmi ces autres monomères, on peut citer les monomères ou les mélanges de monomères de formule :

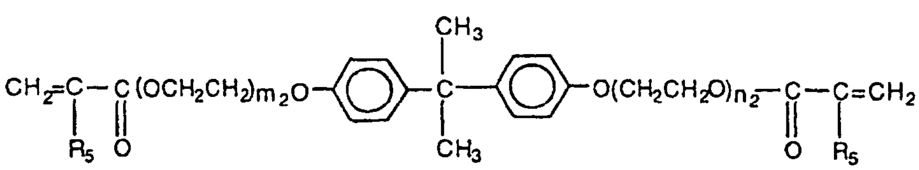

(IX)

dans laquelle $R_5$ représente indépendamment H ou $CH_3$ et $m_2+n_2$ a une valeur moyenne de 0 à 20 inclus.

Des monomères de formule (IX) préférés sont les composés pour lesquels $R_5=CH_3$ et $m_2+n_2 = 2{,}6$ (EBADMA), $m_2+n_2 = 4$ (DBADMA) et $m_2+n_2 = 10$ (OBADMA).

Le monomère particulièrement préféré est le bis(diéthoxyméthacrylate) de bisphénol-A (DBADMA).

Ces monomères représentent de 0 à 60% en poids, de préférence 10 à 50% en poids, des monomères polymérisables présents dans la composition.

Les compositions polymérisables selon l'invention peuvent également comporter des additifs classiquement utilisés dans les compositions polymérisables pour le moulage d'articles optiques, en particulier des verres de lunette, dans des proportions classiques, à savoir des inhibiteurs, des colorants, des absorbeurs UV, des parfums, des déodorants, des antioxydants et des absorbants anti-jaunissement.

Comme exemples préférentiels d'agents antioxydants, on peut citer la triphénylphosphine (TPP) et l'Irganox® 1010 (pentaérythritol-tetrakis[3(3,5-di-tert.-butyl-4-hydroxyphényl)propionate] (CG1010).

Les parfums permettent de masquer l'odeur des compositions, en particulier lors des opérations de surfaçage.

Les compositions selon l'invention comprennent généralement des amorceurs de polymérisation, de préférence des photoamorceurs ou des mélanges de photoamorceurs et d'amorceurs thermiques, en proportion de 0,001 à 5% en poids par rapport au poids total des monomères polymérisables contenus dans la composition.

Parmi les photoamorceurs utilisables dans les compositions polymérisables selon l'invention, on peut citer en particulier, l'oxyde de 2,4,6-triméthylbenzoyldiphénylphosphine (TPO), la 1-hydroxycyclohexylphénylcétone, la 2,2-diméthoxy-1,2-diphényléthane 1-one, les alkylbenzoyléthers, le photoamorceur commercialisé par la Société CIBA-GEIGY sous la dénomination CGI 1700, qui est un mélange 25/75 d'un composé de formule :

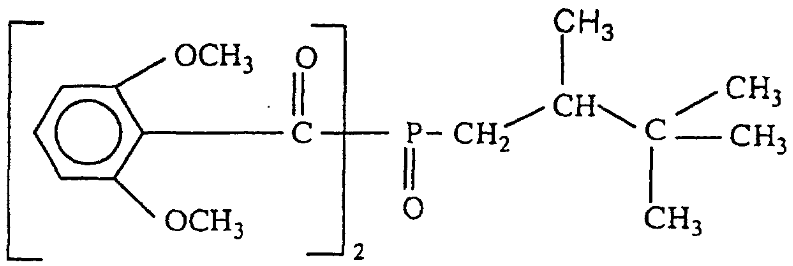

(A)

et d'un composé de formule :

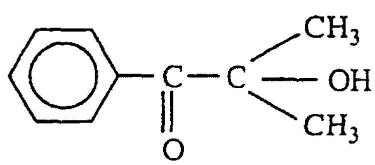

(B)

et le photoamorceur CGI 1850 commercialisé par la Société CIBA GEIGY qui est un mélange (50/50) (en poids) de composé A et d'Trgacure® 184 de formule :

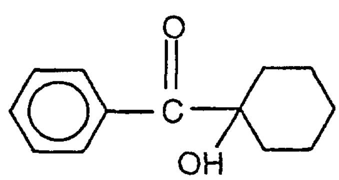

Comme indiqué précédemment, les compositions polymérisables préférées selon l'invention sont des compositions photopolymérisables comportant un ou plusieurs photoamorceurs.

De préférence encore, les compositions polymérisables selon l'invention sont des compositions photo- et thermopolymérisables comprenant à la fois un photoamorceur de polymérisation et un amorceur thermique de polymérisation.

Les amorceurs de polymérisation thermique sont des composés bien connus dans la technique et on peut citer parmi ceux-ci les péroxydes tels que le péroxyde de benzoyle, le péroxydicarbonate de cyclohexyle, le péroxydicarbonate d'isopropyle et le t.-butylperoxy(2-éthyl hexanoate).

Les monomères de formule (IV) peuvent être synthétisés, soit par réaction de Diels Alder entre un composé comportant deux ou plus fonctions (méth)acrylate ou thio(méth)acrylate et un cycloalcène tel que le cyclopentadiène, le norbomadiène ou par addition de type thiol/ène entre un composé polythiol et un composé ène tel que le cyclopentadiène, le norbornadiène, le vinylnorbornène ou l'éthylidène norbornène.

On fait réagir le composé polythiol et le composé ène dans des proportions correspondant sensiblement à un groupement thiol du ou des composés polythiol par mole de composé ène.

A titre d'exemple, on indique ci-après le schéma de synthèse de monomères à haut nombre d'Abbe selon l'invention, à partir de 5-vinyl-2-norbornène ou 5-éthylidène-2-norbomène avec un dithiol :

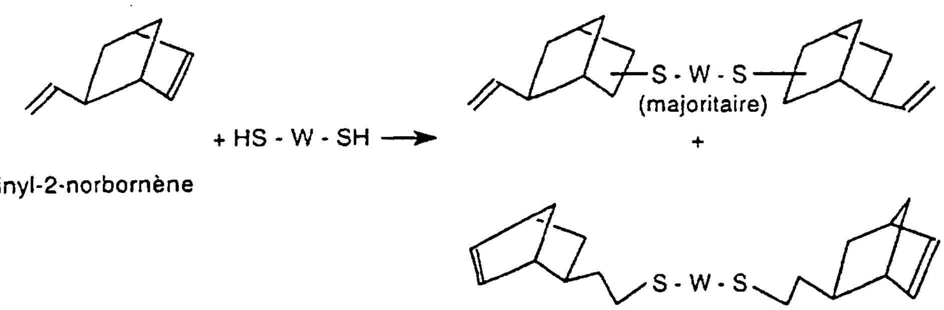


5-vinyl-2-norbornène

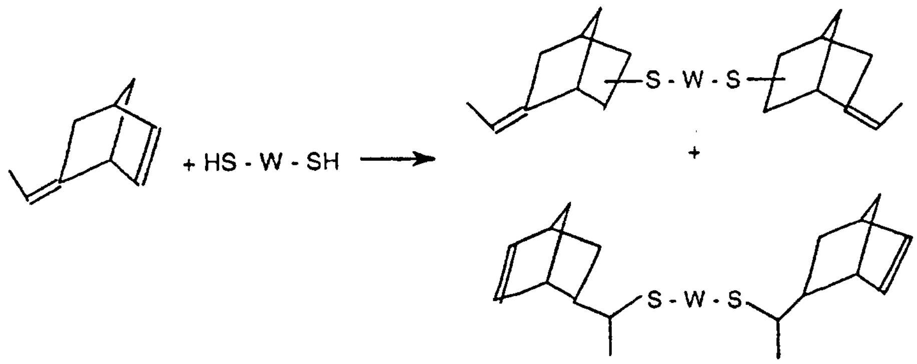


où W est un radical aliphatique ou aromatique.

**Exemples de synthèse de monomères de formule (IV) par la réaction de Diels Alder.**

1) <u>Synthèse du bisphénol-A 2-éthoxylé dinorbornène (EBPADN)</u> :

Dans un tricol équipé d'une agitation mécanique, d'une ampoule d'introduction de réactif et d'un condenseur, on introduit 700 g de bisphénol-A 2-éthoxylé diacrylate (EBPADA) SARTOMER® SR 349. L'EBPADA avait un indice de réfraction $n_D$ à 21°C de 1,5465 et une densité à 21°C de 1,1478.

On effectue alors un dégazage du monomère acrylique au moyen d'une pompe primaire, puis on introduit du diazote dans le tricol. On ajoute alors, goutte à goutte, par l'ampoule, 198 g de cyclopentadiène (CPD) fraîchement craqué. La température du milieu réactionnel monte au fur et à mesure que s'effectue la réaction de Diels-Alder entre le cyclopentadiène et le diacrylate. On évacue alors l'excès de cyclopentadiène en alternant le vide au moyen de la pompe primaire et l'introduction de diazote dans le tricol. On achève l'évacuation de l'excès de cyclopentadiène au moyen d'un évaporateur rotatif. Si on observe la présence d'impuretés, on filtre alors le monomère obtenu au moyen d'un Bécher à vide.

On obtient le produit attendu, EBPADN, ayant une masse molaire de 556, un indice de réfraction $n_D$ à 21°C de 1,5497, une densité à 21°C de 1,1569 avec un rendement de 93,53%.

2) <u>Synthèses du triméthylol propane trinorbornène (TMPTN)</u> :

On procède comme dans l'exemple de synthèse précédant, mais sans évacuation finale de l'excès de CPD, au moyen d'un évaporateur rotatif pour éviter une prise en masse.

Dans cette synthèse, on a utilisé 338 g de triméthylol propane triacrylate, masse molaire 296, indice de réfraction $n_D$ à 21°C 1,4752 et densité à 21°C 1,10067, produit commercialisé par la Société CRAY VALLEY sous la

référence SR 351, et on a ajouté 217 g de cyclopentadiène.

On a obtenu le produit attendu, TMPTN, de masse molaire 494, d'indice de réfraction $n_D$ à 21°C de 1,511 et de densité à 21°C de 1,146, avec un rendement supérieur à 95%.

3) Synthèse du dithiométhanorbornène de sulfure de mercaptoéthyle (DTMNSME) :

On procède comme dans l'exemple de synthèse 1, en utilisant comme produit de départ 211 g de bis[(2-méthacryloylthio)éthyl]sulfure (BMTES); masse molaire 282, $n_D$ à 21°C 1,5745, densité à 21°C 1,177, et 100 g de cyclopentadiène.

On obtient le produit attendu (DTMNSME) ayant une masse molaire de 414, un indice de réfraction $n_D$ à 21°C de 1,5683, une densité à 21°C de 1,1588, avec un rendement supérieur à 95%.

Il faut noter que la réactivité d'un thiométhacrylate est très supérieure à celle du méthacrylate correspondant (qui aurait nécessité pour la réaction un catalyseur du type acide de Lewis).

4) Exemples de synthèse à partir de 5-vinyl-2-norbornène et de 5-éthylidène-2-norbomène

**EXEMPLE DE SYNTHESE 1** :

Dans un réacteur muni d'un condenseur, d'une agitation magnétique et d'une alimentation d'azote permettant de travailler sous atmosphère inerte, on introduit 12,6 g de 5-vinyl-2-norbornène (pureté 95%). On chauffe à 70°C et on additionne 8,5 g de 2-mercaptoéthyl sulfure en 30 minutes à l'aide d'une ampoule à addition. Au cours de l'addition, on observe une exothermie et la température du milieu réactionnel atteint 165°C. La réaction est suivie par infrarouge jusqu'à disparition totale de la bande -S-H à 2571 $cm^{-1}$. Le produit présente un indice de réfraction de 1,571 à 25°C.

**EXEMPLE DE SYNTHESE 2** :

On opère de la même manière qu'à l'exemple de synthèse 1, en utilisant 11,2 g de 4-mercaptométhyl-3,6-dithia-1,8-octane dithiol (pureté 93%) et 15,2 g de 5-vinyl-2-norbornène. La température maximale atteinte au cours de l'addition d thiol est de 79°C. Le produit obtenu présente un indice de réfraction de 1,579 à 25°C.

**EXEMPLE DE SYNTHESE 3 :**

On opère de la même manière qu'à l'exemple de synthèse 1, en utilisant 12,2 g de pentaérythritol tétrakis (3-mercaptopropionate) et 12,6 g de 5-vinyl-2-norbornène. La température maximale atteinte au cours de l'addition du thiol est de 134°C. Le produit obtenu présente une viscosité de 0,48 Pa.s à 25°C et un indice de réfraction de 1,531 à 25°C.

**EXEMPLE DE SYNTHESE 4 :**

On opère de la même manière qu'à l'exemple de synthèse 1, en utilisant 12,2 g de pentaérythritol tétrakis (3-mercaptopropionate) et 12 g de 5-éthylidène-2-norbornène (pureté 99%). La température maximale atteinte lors de l'addition du thiol est de 95°C. Le produit obtenu présente une viscosité de 7,66 Pa.s à 25°C et un indice de réfraction de 1,5445 à 25°C.

On a réalisé par mélange des constituants indiqués dans le tableau I ci-après, les compositions 1 à 6 de l'invention.

Ces compositions sont ensuite coulées dans un moule en verre minéral en deux parties, et polymérisées pour obtenir des lentilles ophtalmiques selon l'invention.

On a déterminé sur ces lentilles l'indice de réfraction à 21°C, le nombre d'Abbe, la densité à 21°C, la température de transition vitreuse, l'aptitude à la coloration et l'odeur.

Dans les exemples suivants, sauf indication contraire, tous les parties et pourcentages sont exprimés en poids.

Les pourcentages d'adjuvants sont exprimés généralement en pourcent en poids par rapport au poids total de monomères polymérisables présents dans la composition.

**Exemples 1 à 5 et exemples comparatifs C6 et C7.**

On réalise par simple mélange physique les compositions indiquées dans le tableau I ci-dessous.

## TABLEAU I

### Exemples

Compositions (Parties en poids)

| | | 1 | 2 | 3 | 4 | 5 | C6 | C7 |
|---|---|---|---|---|---|---|---|---|
| (A) | BMTES | 50 | 50 | 50 | 50 | 50 | 50 | 54 |
| (B) | DCPA | 35 | 30 | 25 | 18 | 10 | - | - |
| (C) | PETG | 15 | 20 | 15 | 15 | 15 | 15 | - |
| | TMTP | - | - | - | - | - | - | 6 |
| (D) | DBADMA | - | - | 10 | 17 | 20 | 35 | 40 |
| | UV 5411 | 0,10 % | 0,10 % | 0,10 % | 0,10 % | 0,10 % | 0,10 % | 0,10 % |
| | CG 1010 | 0,10 % | 0,10 % | 0,10 % | 0,10 % | 0,10 % | 0,10 % | 0,10 % |
| | TPO | 0,07 % | 0,07 % | 0,07 % | 0,07 % | 0,07 % | 0,07 % | 0,07 % |
| | Irgacure® 184 | 0,03 % | 0,03 % | 0,03 % | 0,03 % | 0,03 % | 0,03 % | 0,03 % |
| | Perbutyl O | 0,10 % | 0,10 % | 0,10 % | 0,10 % | 0,10 % | 0,10 % | 0,10 % |

BMTES : bis(2-méthacryloylthioéthyl)sulfure

DCPA : Diacryloyl d'oxyméthyl tricyclodécane

PETG : Pentaérythritol tétrakis (thioglycolate)

TMTP : Triméthylolpropane tris-3-mercaptopropionate

DBADMA :

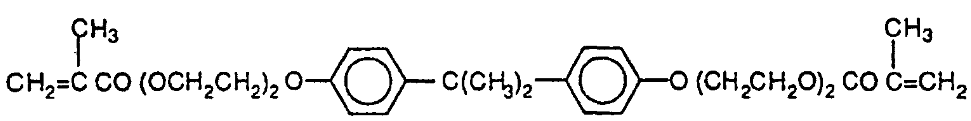

UV 5411 : 2-(2-hydroxy-5-t-octylphényl)benzotriazole (absorbeur UV)

CG 1010 : Pentaérythritol tetrakis [3-(3,5-di-tert.-butyl-4-hydroxy-phényl)propionate] (agent antioxydant)

TPO : oxyde de 2,4,6-triméthyl benzoyl diphényl phosphine (photo-amorceur)

Irgacure 184 : 1-hydroxycyclohexyl phénylcétone (photoamorceur)

Perbutyl O : t-butylperoxy(2-éthyl hexanoate) (amorceur thermique).

Chacun des mélanges est versé dans un moule en verre minéral pour lentilles ophtalmiques, puis les moules

ainsi remplis sont exposés à une irradiation UV.

Les résultats des mesures des indices de réfraction, nombre d'Abbe et température de transition vitreuse (Tg), sont donnés dans le tableau II ci-après.

TABLEAU II

| | **Exemples** | | | | | | |
|---|---|---|---|---|---|---|---|
| | 1 | 2 | 3 | 4 | 5 | C6 | C7 |
| Indice de réfraction | | | | | | | |
| $n_D$<br>$n_E$ | 1,583<br>1,588 | 1,586<br>1,591 | 1,586<br>1,59 | 1,588<br>1,592 | | 1,594<br>1,599 | 1,593<br>1,598 |
| Nombre d'Abbe | | | | | | | |
| $D_D$<br>$D_E$<br>$T_g$ | 43,58<br>43,91<br>> 80°C | 44,18<br>44,5<br>>80°C | 41,9<br>42,21<br>>80°C | 43,02<br>43,34<br>>80°C | | 39,73<br>39,04<br>>80°C | 37,43<br>37,73<br>>80°C |

**Exemples 8 à 10**

On réalise les compositions suivantes indiquées dans le tableau III ci-dessous.

## TABLEAU III

Compositions (parties en poids)

| | 8 | 9 | 10 |
|---|---|---|---|
| (A) BMTES | 50 | 20 | 30 |
| (B) EBPADN | 30 | 30 | 30 |
| (C) DMDS | 20 | - | 10 |
| MDO | - | 50 | 30 |
| CGI 1850 | 0,15 % | 0,15 % | 0,15 % |
| TBPEH | 0,1 % | 0,1 % | 0,1 % |
| UV 5411 | 0,07 % | 0,07 % | 0,07 % |

EBPADN : Bisphénol-A 2-éthoxylé dinorbornène

DMDS : Dimercaptodiéthylsulfure

MDO : 4-mercaptométhyl-3,6-dithio-1,8-octanedithiol

CGI 1850 : Mélange 50/50 de 1-hydroxycyclohexylphénylcétone et

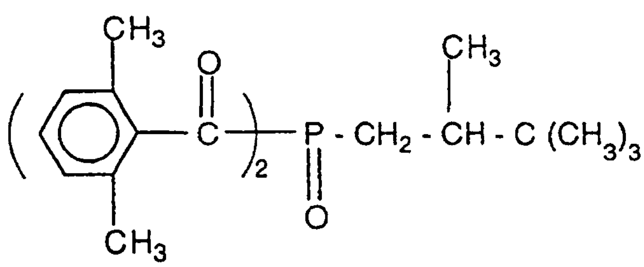

TBPEH : t-butylperoxy(2-éthyl hexanoate).

Les mélanges polymérisables 8 à 10 sont versés dans un moule en verre minéral pour lentilles ophtalmiques, puis les moules ainsi remplis sont exposés à une irradiation UV.

Les résultats des mesures d'indice de réfraction, nombre d'Abbe, densité et température de transition vitreuse (Tg), sont indiqués dans le tableau IV ci-après.

TABLEAU IV

| | **Exemples** | | |
|---|---|---|---|
| | 8 | 9 | 10 |
| $n_D$ | 1,602 | 1,631 | 1,623 |
| $D_D$ | 42 | 39 | 38 |
| $d_{21}$ | 1,22 | 1,25 | - |
| $T_g$ (°C) | 89 | 90 | 75 |
| Colorabilité | Oui | Oui | Oui |

TABLEAU IV (suite)

| | Exemples | | |
|---|---|---|---|
| | 8 | 9 | 10 |
| Odeur | Non | Non | Non |

**Exemples 11 à 13**

On a formulé comme précédemment les compositions indiquées dans le tableau V ci-dessous.

On a également indiqué dans le tableau V les résultats de mesures d'indice de réfraction, nombre d'Abbe, densité, température de transition vitreuse, ainsi que d'un essai d'insolation pour des lentilles moulées à partir de ces compositions.

## TABLEAU V

**Exemples**

| | 11 | 12 | 13 |
|---|---|---|---|
| BMTES | 46 | 26 | 40 |
| 80 N | 22 | 23 | - |
| DCP | - | 30 | - |
| DCPA | 12 | - | 40 |
| PETG | 20 | - | - |
| PDT | - | 20 | 20 |
| TPO | 0,1 % | 0,1 % | 0,1 % |
| Irgacure® 184 | 0,1 % | 0,1 % | 0,1 % |
| Catalyseur thermique | 0,1 % | 0,1 % | 0,1 % |
| $n_E$ | 1,5967 | 1,5945 | 1,6002 |
| $n_D$ | 1,5917 | 1,5986 | 1,5955 |
| $\nu_E$ | 40 | 41 | 42 |
| $\nu_D$ | 39 | 40 | 41 |
| Densité | 1,3 | 1,24 | 1,27 |
| Indice de jaune (YI) | 0,6 | 0,7 | 0,8 |
| $T_g$ | > 80°C | >80°C | > 80°C |
| Essai d'insolation | Bon | Bon | Bon |

8O N : Monomère BPE-8O N, commercialisé par la Société SHIN NAKAMURA, de formule :

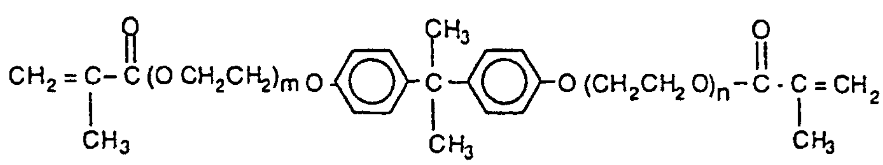

dans laquelle la valeur moyenne de m+n = 2,6.

PDT : $C(CH_2SCH_2CH_2SCH_2CH_2SH)_4$

DCP : Diméthacrylate d'oxyméthyl tricyclodécane.

L'indice de jaune a été mesuré selon la norme ASTM D 1425-63.

L'essai d'insolation consiste à soumettre des éprouvettes pendant 200 heures à une insolation dans les mêmes conditions avec un appareil SUNTEST HANAU émettant un rayonnement de 24,4 w/$m^2$ dans le domaine spectral de 300-400 nm et à mesurer l'indice de jaune (YI) avant et après irradiation. Le test est considéré comme positif (BON) si la différence de YI est inférieure ou égale à 1.

Mesure de la colorabilité

La mesure donnée est la valeur de la transmission mesurée dans le visible d'un verre de 2 mm d'épaisseur centre coloré par trempage dans un bain aqueux à 94°C, dans lequel est dispersé un pigment rouge "disperse Red 13" de la Société Eastman Kodak.

La mesure de la Tg est effectuée par DMA (Analyse mécanique dynamique) sur une éprouvette de 5,2 cm x 1 cm x 2 mm (épaisseur) plane.

L'essai est effectué en flexion 3 points.

Tg correspond au maximum du rapport

$$\frac{E''}{E'}\ \frac{\text{(module de perte)}}{\text{(module de conservation)}}.$$

D'une manière générale, sauf indication contraire, tous les essais ont été effectués sur des échantillons de 2 mm d'épaisseur.

## Revendications

1. Composition de monomères polymérisables **caractérisée en ce qu'**elle comprend :

   **(A)** au moins un monomère polythio(méth)acrylate;
   **(B)** au moins un monomère à haut nombre d'Abbe comportant au moins 2 groupements polymérisables, de préférence 2 à 4 groupements polymérisables, et au moins une unité constitutive cyclique pontée, la ou les unités constitutives cycliques pontées n'étant pas directement liées à un atome d'oxygène;
   **(C)** au moins un monomère polythiol; et, facultativement,
   **(D)** au moins un autre monomère copolymérisable avec les monomères (A), (B) et (C);

   la composition étant exempte de tous monomères comportant un ou plusieurs groupes fonctionnels vinyliques, autres que des groupes fonctionnels (méth)acryliques et thio(méth)acryliques et différents des monomères (B)..

2. Composition de monomères polymérisables selon la revendication 1, **caractérisée en ce que** le monomère (A) est un dithio(méth)acrylate.

3. Composition de monomères polymérisables selon la revendication 1, **caractérisée en ce que** le monomère (A) a pour formule :

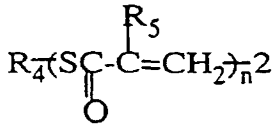

(I)

   dans laquelle :

$R_4$ représente un radical hydrocarboné aliphatique, linéaire ou ramifié, monovalent ou polyvalent, ou un groupement aromatique ou hétérocyclique monovalent ou polyvalent directement lié à l'atome de soufre du ou des groupements thio(méth)acrylates par un noyau ou par l'intermédiaire d'une chaîne alkyle linéaire, le radical $R_4$ pouvant comporter dans sa chaîne un ou plusieurs groupes choisis parmi -O-,

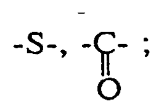

$R_5$ représente l'hydrogène ou $-CH_3$; et
$n^2$ est un entier de 1 à 6, de préférence de 1 à 3.

**4.** Composition de monomères polymérisables selon la revendication 1, **caractérisée en ce que** le monomère (A) est le bis(2-méthacryloylthioéthyl)sulfure (BMTES).

**5.** Composition selon l'une quelconque des revendications précédentes, **caractérisée en ce que** le monomère (A) constitue 10 à 60% en poids, de préférence 25 à 60% en poids, par rapport au poids total des monomères polymérisables présents dans la composition.

**6.** Composition de monomères polymérisables selon l'une quelconque des revendications précédentes, **caractérisée en ce que**, dans le monomère (B), les unités constitutives cycliques pontées sont choisies parmi les radicaux norbornényles, dicyclopentényles et leurs dérivés hydrogénés divalents.

**7.** Composition selon l'une quelconque des revendications précédentes, **caractérisée en ce que** les groupements polymérisables du monomère (B) sont choisis parmi les radicaux norboményles, dicyclopentényles, (méth)acryliques et thio(méth)acryliques.

**8.** Composition selon l'une quelconque des revendications précédentes, **caractérisée en ce que** les groupements polymérisables du monomère (B) sont choisis parmi les motifs cycliques pontés comportant une double liaison éthylénique intracyclique ou un reste aliphatique, linéaire ou ramifié, comportant une insaturation éthylénique, de préférence un groupe vinyle ou éthylidène directement lié à un carbone du cycle.

**9.** Composition selon la revendication 8, **caractérisée en ce que** les groupements polymérisables du monomère (B) sont choisis parmi les groupements de formules :

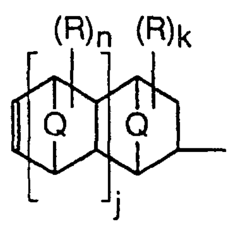

où n est un entier de 0 à 5 inclus, k est un entier de 0 à 3 inclus et j est un entier de 0 à 10 inclus, et

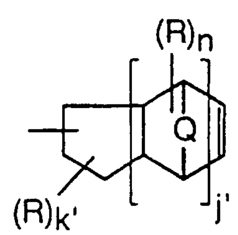

où n est un entier de 0 à 5 inclus, k' un entier de 0 à 2 inclus et j' un entier de 0 à 10 inclus, Q représente un groupe $-C(R')_2-$, -O-, -S-, -NR'- ou $-SO_2-$, avec R' désignant H ou un radical alkyle en $C_1$-$C_3$, et R est un atome d'hydrogène ou un groupe alkyle en $C_1$-$C_3$.

**10.** Composition selon la revendication 8, **caractérisée en ce que** les groupements polymérisables du monomère (B) sont choisis parmi les groupements de formules :

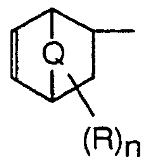 et 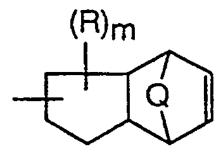

dans lesquelles les radicaux R représentent, indépendamment les uns des autres, H ou un groupe alkyle en $C_1$-$C_3$, de préférence H ou $-CH_3-$, et Q est un radical divalent choisi parmi $-C(R')_2-$, -O-, -S-, $-SO_2-$, -NR'-, où R' est un atome d'hydrogène ou un radical alkyle en $C_1$-$C_3$, de préférence $-CH_3-$, Q étant de préférence un radical $-CH_2$ -, n est un entier de 0 à 5 et m un entier de 0 à 8.

**11.** Composition selon la revendication 10, **caractérisée en ce que** le monomère (B) répond à la formule générale :

$$Z\{(A)_n a \qquad (IV)$$

dans laquelle $n^a$ est un entier de 2 à 4 et A est un radical choisi parmi les radicaux de formules :

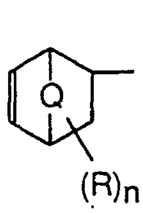 et 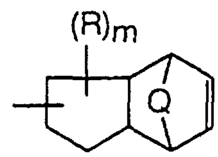

dans lesquelles Q, R, m et n sont tels que définis dans la revendication 10, et

(**I**) lorsque $n^a$=2, Z représente un radical divalent de formule :

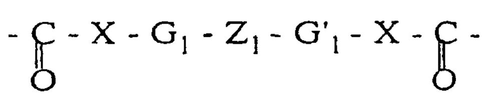 (V),

ou

$$- S - Z_2 - S - \qquad (VI)$$

dans lesquelles X représente -O- ou -S- , $G_1$ et $G'_1$ sont des groupes

$$-(C_{n'}H_{2n'}O)_{m'}$$

avec n'=1 à 5, de préférence n'=2, et m' varie de 0 à 10, ou un groupe alkylène en $C_1$-$C_5$ ; $Z_1$ est choisi parmi les radicaux divalents de formules :

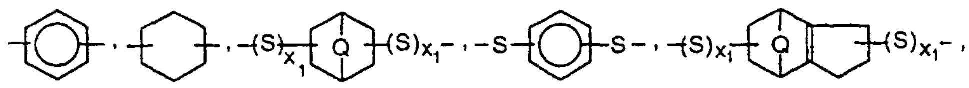

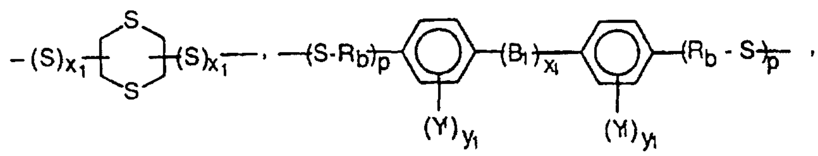

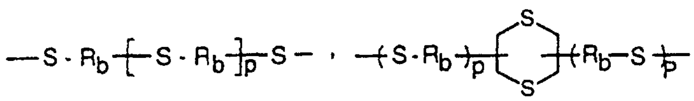 et

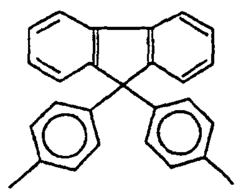

dans lesquelles Q est défini comme ci-dessus, $B_1$ représente - $C(R_2)_2$- ou -S-, et $R_2$ est un radical alkyle en $C_1$-$C_3$, de préférence $-CH_3$, et $x_1$=0 ou 1, $Y_1$ représente, indépendamment les uns des autres, Br, Cl ou H, $y_1$ est un entier de 0 à 4, $R_b$ est un groupe

$$-(CH_2)_q-$$

et q est un entier de 1 à 4, de préférence égal à 1 ou 2, et p est un entier de 0 à 4, de préférence de 0 à 2; et $Z_2$ est un radical divalent choisi parmi les radicaux de formules :

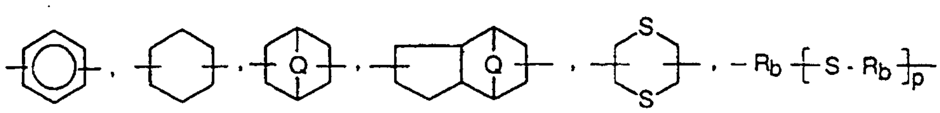

$$-R_b-[SR_b]_p-Z_3-[R_bS]_p-R_b-$$

où Q, $R_b$ et p sont définis comme ci-dessus et $Z_3$ est un radical divalent choisi parmi :

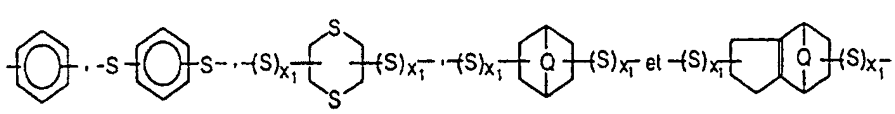

où Q et $x_1$ sont définis comme précédemment ;

**(II)** lorsque $n^a$=3, Z représente un radical trivalent choisi parmi :

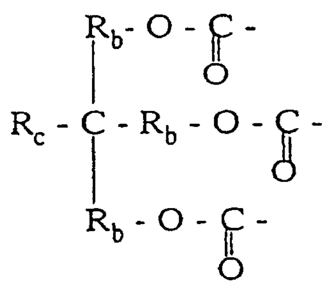

,

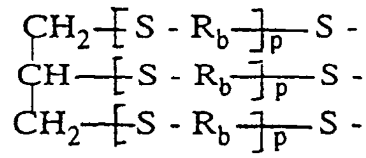

et

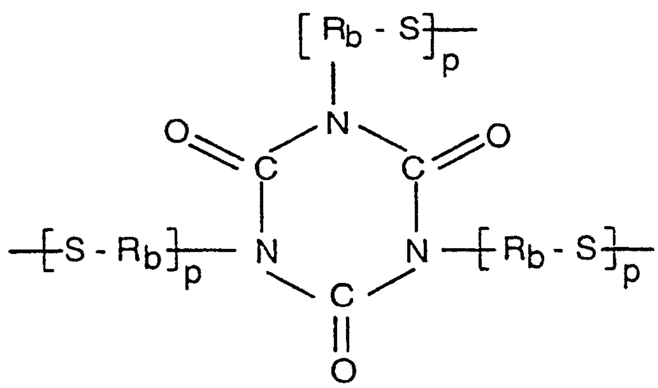

où $R_b$ et p sont définis comme précédemment et $R_c$ représente H ou un groupe alkyle en $C_1$-$C_3$, de préférence $-CH_3$ ; et

**(III)** lorsque $n^a$=4, Z représente un radical tétravalent choisi parmi les radicaux :

$$C-[R_3]_4$$

où $R_3$ est un radical alkylène en $C_1$-$C_5$ ou un radical

$$-[SR_b]_p-S-$$

où $R_b$ et p sont définis comme précédemment.

**12.** Composition selon la revendication 11, **caractérisée en ce que** le monomère (B) a pour formule :

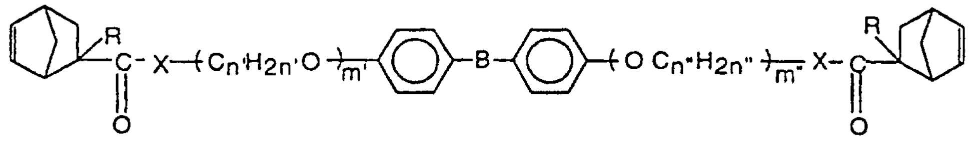
(VII)

dans laquelle X représente -O- ou -S-, n' et n"=1 à 5 et m' et m" varient de 0 à 10.

**13.** Composition selon la revendication 12, **caractérisée en ce que** le monomère (B) a pour formule :

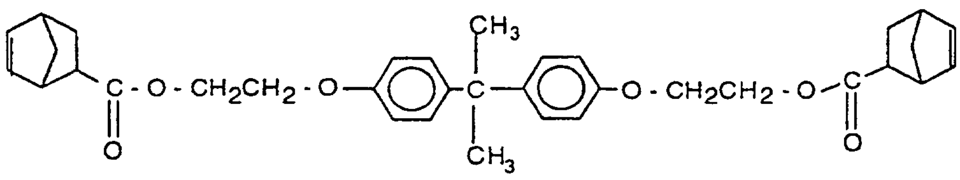
(EBPADN)

**14.** Composition selon l'une quelconque des revendications 1 à 6, **caractérisée en ce que** le monomère (B) a pour formule :

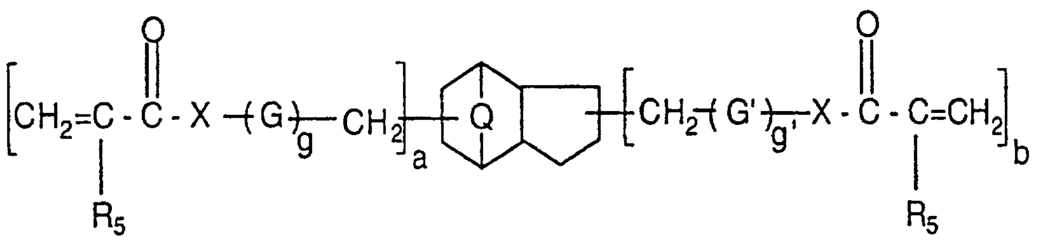
(III)

dans laquelle $R_5$ représente un atome d'hydrogène ou un groupe $CH_3$, X représente -O- ou -S-, G et G' représentent un groupe

$$-(CH_2)_r-O- \quad , \quad -CH_2-\overset{CH_3}{\overset{|}{C}}-O- \quad \text{ou} \quad -(CH_2)_r-S-$$

dans lesquels r = 1-4

Q est tel que défini précédemment, et a et b sont égaux à 1 ou 2, et g et g' varient de 0 à 6.

**15.** Composition selon la revendication 14, **caractérisée en ce que** le monomère (B) répond à la formule :

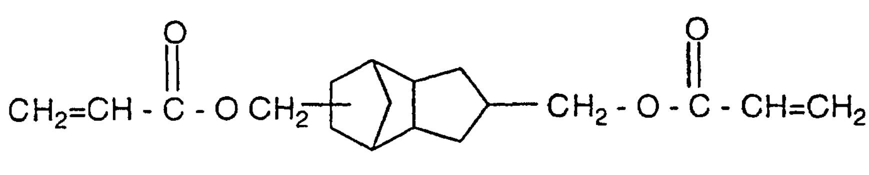
(DCPA)

**16.** Composition selon l'une quelconque des revendications précédentes, **caractérisée en ce que** le monomère (B) représente 5 à 50%, de préférence 10 à 40% en poids par rapport au poids total des monomères (A), (B), (C) et (D) présents dans la composition.

**17.** Composition selon l'une quelconque des revendications précédentes, **caractérisée en ce que** le monomère polythiol (C) a pour formule $R_1(SH)_n1$ , dans laquelle $n^1$ est un entier de 2 ou plus, de préférence 2 à 5, et $R_1$ est un radical aliphatique ou aromatique.

**18.** Composition selon la revendication 15, **caractérisée en ce que** le monomère polythiol (C) représente 10 à 60% , de préférence 20 à 50% en poids, par rapport au poids total des monomères polymérisables présents dans la composition.

**19.** Composition selon l'une quelconque des revendications précédentes, **caractérisée en ce que** les autres monomères copolymérisables (D) sont choisis parmi les monomères de formule :

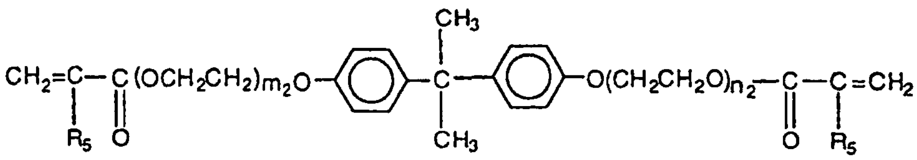

dans laquelle $R_5$ représente H ou $CH_3$ et $m_2+ n_2$ a une valeur moyenne de 0 à 20 inclus.

**20.** Composition selon l'une quelconque des revendications précédentes, **caractérisée en ce que** les autres monomères copolymérisables (D) représentent 0 à 60%, de préférence 10 à 50% en poids, des monomères polymérisables présents dans la composition.

**21.** Lentille optique obtenue par polymérisation d'une composition selon l'une quelconque des revendications précédentes.

**22.** Lentille optique selon la revendication 21, **caractérisée en ce que** la lentille est une lentille ophtalmique.

**23.** Lentille optique selon la revendication 22, **caractérisée en ce que** la lentille est un verre de lunette.

## Claims

**1.** Composition comprising polymerizable monomers, **characterized in that** it comprises:

(A) at least one polythio(meth)acrylate monomer;
(B) at least one monomer with a high Abbe number comprising at least 2 polymerizable groups, preferably 2 to 4 polymerizable groups, and at least one bridged cyclic component unit, the bridged cyclic component unit or units not being bonded directly to an oxygen atom ;
(C) at least one polythiol monomer ; and, optionally,
(D) at least one other monomer which is copolymerizable with the monomers (A), (B) and (C),

the composition being free of any monomer comprising one or more vinyl functional groups, other than (meth) acrylic and thio(meth)acrylic functional groups, which is different from the monomers (B).

**2.** Composition comprising polymerizable monomers according to Claim 1, **characterized in that** the monomer (A) is a dithio(meth)acrylate.

**3.** Composition comprising polymerizable monomers according to Claim 1, **characterized in that** the monomer (A) has the formula :

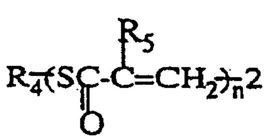

(I)

in which :

$R_4$ represents a linear or branched, monovalent or polyvalent, aliphatic hydrocarbon radical or a monovalent or polyvalent, aromatic or heterocyclic group bonded directly to the sulphur atom of the thio(meth)acrylate group or groups by a ring or via a linear alkyl chain, the $R_4$ radical being liable to comprise, in its chain, one or more groups selected from -O-, -S- or

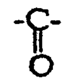 ;

$R_5$ represents hydrogen or $-CH_3$ ; and
$n^2$ is an integer from 1 to 6, preferably from 1 to 3.

**4.** Composition comprising polymerizable monomers according to Claim 1, **characterized in that** the monomer (A) is bis(2-methacryloylthioethyl)sulphide (BMTES).

**5.** Composition according to any one of the preceding claims, **characterized in that** the monomer (A) is 10 to 60 % by weight, preferably 25 to 60 % by weight, based on the total weight of the polymerizable monomers present in the composition.

**6.** Composition comprising polymerizable monomers according to any one of the preceding claims, **characterized in that**, in the monomer (B), the bridged cyclic component units are selected from norbornenyl and dicyclopentenyl radicals and their divalent hydrogenated derivatives.

**7.** Composition according to any one of the preceding claims, **characterized in that** the polymerizable groups of the monomer (B) are selected from norbornenyl, dicyclopentenyl, (meth)acrylic and thio(meth)acrylic radicals.

**8.** Composition according to any one of the preceding claims, **characterized in that** the polymerizable groups of the monomer (B) are selected from bridged cyclic units comprising an intracyclic ethylenic double bond or a linear or branched aliphatic residue comprising an ethylenic unsaturation, preferably a vinyl or ethylidene group bonded directly to a carbon of the ring.

**9.** Composition according to Claim 8, **characterized in that** the polymerizable groups of the monomer (B) are selected from groups of formulae :

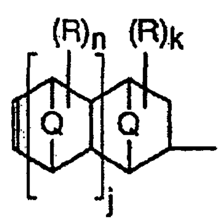

where n is an integer from 0 to 5 inclusive, k is an integer from 0 to 3 inclusive and j is an integer from 0 to 10 inclusive, and

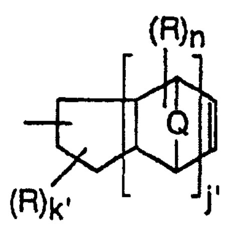

where n is an integer from 0 to 5 inclusive, k' is an integer from 0 to 2 inclusive and j' is an integer from 0 to 10 inclusive, Q represents a $-C(R')_2-$, -O-, -S-, -NR'- or $-SO_2-$ group, with R' being H or a $C_1$-$C_3$ alkyl radical, and R

is a hydrogen atom or a $C_1$-$C_3$ alkyl group.

**10.** Composition according to Claim 8, **characterized in that** the polymerizable groups of the monomer (B) are selected from groups of formulae :

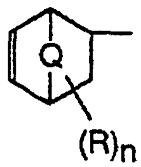

and

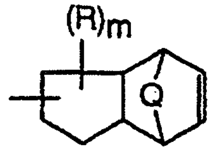

in which the R radicals represent, independently of one another, H or a $C_1$-$C_3$ alkyl group, preferably H or $-CH_3$, Q is a divalent radical selected from $-C(R')_2-$, -O-, -S-, $-SO_2-$ or -NR'-, where R' is a hydrogen atom or a $C_1$-$C_3$ alkyl radical, preferably $-CH_3$, Q preferably being a $-CH_2-$ radical, n is an integer from 0 to 5 and m is an integer from 0 to 8.

**11.** Composition according to Claim 10, **characterized in that** the monomer (B) has the general formula :

$$Z\{A)_{n}a \qquad (IV)$$

in which $n^a$ is an integer from 2 to 4 and A is a radical selected from radicals of formulae :

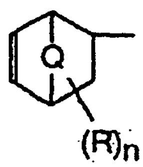

and

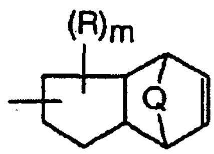

in which Q, R, m and n are as defined in Claim 10, and

(I) when $n^a$ = 2, Z represents a divalent radical of formula :

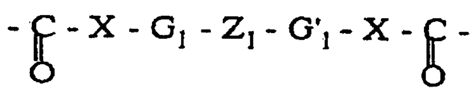

(V),

or

$$- S - Z_2 - S - \qquad (VI)$$

in which formulae X represents -O- or -S-, $G_1$ and $G'_1$ are $-(-C_{n'}H_{2n'}O-)_{m'}-$ groups, with n' = 1 to 5, preferably n' = 2, and m' varies from 0 to 10, or a $C_1$-$C_5$ alkylene group, $Z_1$ is selected from divalent radicals of formulae :

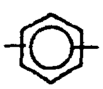, 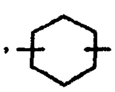, 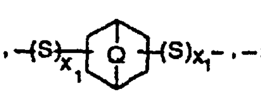, 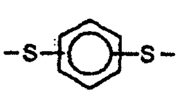, 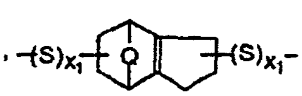,

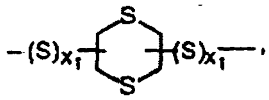 , 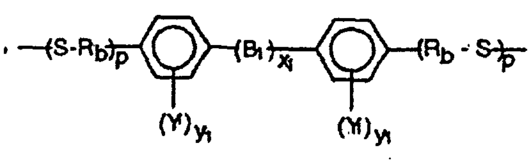 ,

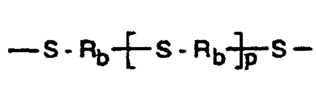 , 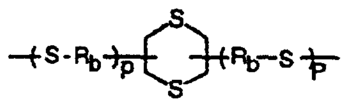

and

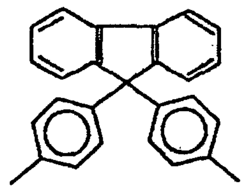

in which formulae Q is defined as above, $B_1$ represents $-C(R_2)_2-$ or -S-, $R_2$ is a $C_1$-$C_3$ alkyl radical, preferably $-CH_3-$, $x_1$ = 0 or 1, $Y_1$ represents, independently of one another, Br, Cl or H, $y_1$ is an integer from 0 to 4, $R_b$ is a $-(-CH_2-)_q-$ group, q is an integer from 1 to 4, preferably equal to 1 or 2, and p is an integer from 0 to 4, preferably from 0 to 2; and

$Z_2$ is a divalent radical chosen from radicals of formulae :

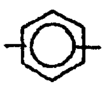 , 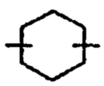 , 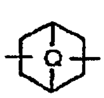 , 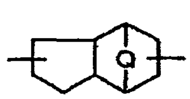 , 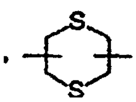 , $-R_b-[S-R_b]_p-$

$-R_b-[-SR_b-]_p-Z_3-[-R_bS-]_p-R_b-$, where Q, $R_b$ and p are defined as above and $Z_3$ is a divalent radical selected from :

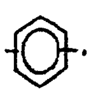 , 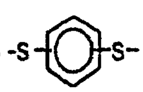 , 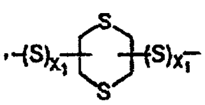 , 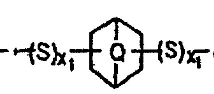 et 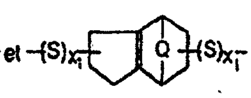

where Q and $x_1$ are defined as above ;

(II) when $n^a$ = 3, Z represents a trivalent radical selected from:

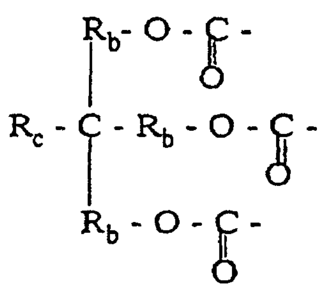 , 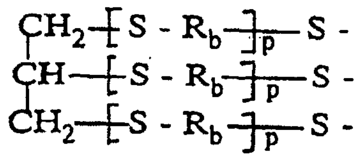

and

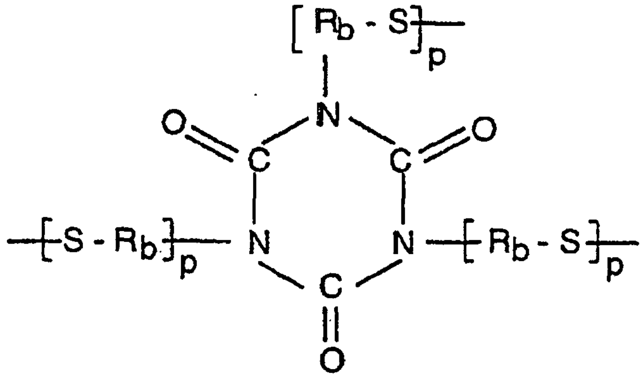

where $R_b$ and p are defined as above and $R_c$ represents H or a $C_1$-$C_3$ alkyl group, preferably $-CH_3$ ; and (III) when $n^a = 4$, Z represents a tetravalent radical selected from the following radicals :

C-[-$R_3$-]$_4$-, where $R_3$ is a $C_1$-$C_5$ alkylene radical or a -[-$SR_b$-]$_p$-S- radical where $R_b$ and p are defined as above.

**12.** Composition according to Claim 11, **characterized in that** the monomer (B) has the formula :

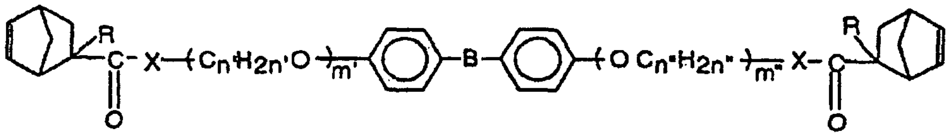
(VII)

in which X represents -O- or -S-, n' and n" = 1 to 5 and m' and m" vary from 0 to 10.

**13.** Composition according to Claim 12, **characterized in that** the monomer (B) has the formula:

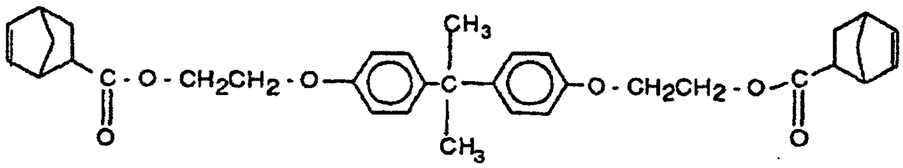
(EBPADN)

**14.** Composition according to any one of Claims 1 to 6, **characterized in that** the monomer (B) has the formula :

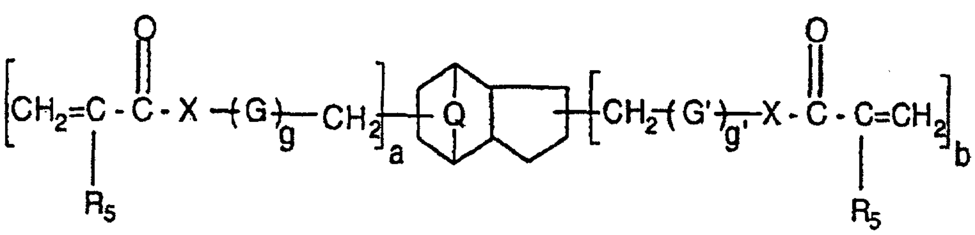
(III)

in which $R_5$ represents a hydrogen atom or a $-CH_3$ group, X represents -O- or -S-, G and G' represent a

$-(CH_2)_r-O-$ , 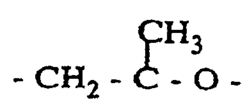 or $-(CH_2)_r-S-$

group in which groups r = 1-4, Q is as defined above, a and b are equal to 1 or 2 and g and g' vary from 0 to 6.

**15.** Composition according to Claim 14, **characterized in that** the monomer (B) has the formula :

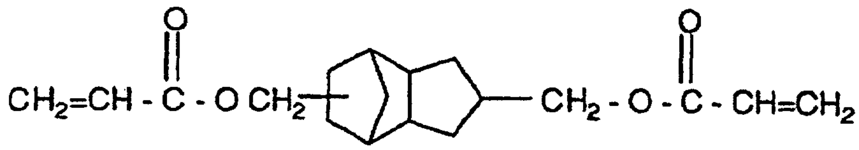

(DCPA)

**16.** Composition according to any one of the preceding claims, **characterized in that** the monomer (B) represents 5 to 50 %, preferably 10 to 40 %, by weight based on the total weight of monomers (A), (B), (C) and (D) present in the composition.

**17.** Composition according to any one of the preceding claims, **characterized in that** the polythiol monomer (C) has the formula $R_1(SH)_n1$, in which $n^1$ is an integer of 2 or more, preferably 2 to 5, and $R_1$ is an aliphatic or aromatic radical.

**18.** Composition according to Claim 15, **characterized in that** the polythiol monomer (C) represents 10 to 60 %., preferably 20 to 50 %, by weight based on the total weight of the polymerizable monomers present in the composition.

**19.** Composition according to any one of the preceding claims, **characterized in that** the other copolymerizable monomers (D) are selected from monomers of formula:

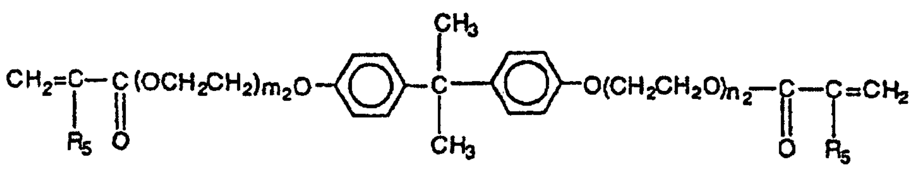

in which $R_5$ represents H or $CH_3$ and $m_2+n_2$ has a mean value from 0 to 20 inclusive.

**20.** Composition according to any one of the preceding claims, **characterized in that** the other copolymerizable monomers (D) represent 0 to 60 %, preferably 10 to 50 %, by weight of polymerizable monomers present in the composition.

**21.** Optical lens obtained by polymerization of a composition according to any one of the preceding claims.

**22.** Optical lens according to Claim 21, **characterized in that** the lens is an ophthalmic lens.

**23.** Optical lens according to Claim 22, **characterized in that** the lens is a spectacle glass.

**Patentansprüche**

**1.** Zusammensetzung von polymerisierbaren Monomeren, dadurch **dadurch gekennzeichnet, daß** sie umfaßt:

A) zumindest ein Polythio-(meth)-acrylat-Monomer;
B) zumindest ein Monomer mit hoher Abbe-Zahl, umfassend zumindest zwei polymerisierbare Gruppierungen, bevorzugt 2 bis 4 polymerisierbare Gruppierungen und zumindest eine einen gebrückten Ring bildende Einheit, wobei die gebrücktringbildende Einheit(en) nicht direkt an ein Sauerstoffatom gebunden ist bzw. sind
C) zumindest ein Polythiolmonomer; und fakultativ,
D)zumindest ein weiteres mit den Monomeren (A) (B) (C) copolymerisierbares Monomer; wobei die Zusammensetzung frei von jeglichen Monomeren ist, umfassend eine oder mehrere funktionelle vinylische Gruppen, mit Ausnahme von funktionellen (meth)-acrylischen und thio (meth) acrylischen Gruppen und unterschiedlich

zu Monomeren (B).

2. Zusammensetzung von polymerisierbaren Monomeren nach Anspruch 1, **dadurch gekennzeichnet, daß** das Monomer (A) ein Dithio-(meth)-acrylat ist.

3. Zusammensetzung von polymerisierbaren Monomeren nach Anspruch 1, **dadurch gekennzeichnet, daß** das Monomer (A) die Gleichung:

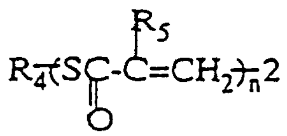

(I)

hat wobei gilt,

$R_4$ stellt ein aliphatisches Kohlenwasserstoff-Radikal, vom linearen oder gewinkelten, monovalenten oder polyvalenten Typ oder eine aromatische oder heterocyclische monovalente oder poylvalente Gruppierung, gebunden an das Schwefelatom des oder der Thio(meth)-acrylat-Gruppierung(en) mittels eines Kernes oder unter Zwischenschaltung einer linearen Alkylkette dar, wobei das Radikal $R_4$ in seiner Kette eine oder mehrere Gruppen umfassen kann, gewählt unter

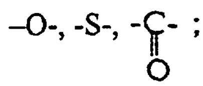

$R_5$ Wasserstoff oder $-CH_3$ darstellt und
$n^2$ eine Ganzzahl von 1 - 6 bevorzugt 1 - 3 ist.

4. Zusammensetzung von polymerisierbaren Monomeren nach Anspruch 1, **dadurch gekennzeichnet, daß** das Monomer (A) bis(2-methacryloylthioethyl)sulfid (BMTES) ist.

5. Zusammensetzung nach einem der vorangegangenen Ansprüche, **dadurch gekennzeichnet, daß** das Monomer (A) 10 - 60 Gewichtsprozent, bevorzugt 25 - 60 Gewichtsprozent ausmacht, mit Bezug auf das Gesamtgewicht der polymerisierbaren Monomere, die in der Zusammensetzung vorliegen.

6. Zusammensetzung von polymerisierbaren Monomeren nach einem der vorangegangenen Ansprüche, **dadurch gekennzeichnet, daß** in dem Monomer (B) die gebrücktringbildendenden Einheiten ausgewählt sind unter den Norbomenyl-, Dicyclopentenylradikalen und deren divalenten hydrogenierten Derivaten.

7. Zusammensetzung nach einem der vorangegangenen Ansprüche, **dadurch gekennzeichnet, daß** die polymerisierbaren Gruppierungen des Monomers (B) ausgewählt unter den Norbomenyl-, Dicyclopentenyl, (Meth)-acryl- und Thio-(meth)-acryl-Radikalen.

8. Zusammensetzung nach einem der vorangegangenen Ansprüche, **dadurch gekennzeichnet, daß** die polymerisierbaren Gruppierungen des Monomers (B) ausgewählt sind unter gebrückten Ring- oder zyklischen Einheiten, umfassend eine intracyklische Ethylendoppelbindung oder einen aliphatischen linearen oder gewinkelten Rest, umfassend eine Ethylen-Nichtsättigung, bevorzugt eine Vinyl- oder Ethylidengruppe, direkt gebunden an einen Kohlenstoff des Ringes.

9. Zusammensetzung nach Anspruch 8, **dadurch gekennzeichnet, daß** die polymerisierbaren Gruppierungen des Monomers (B) ausgewählt sind unter den Gruppierungen mit den Gleichungen,

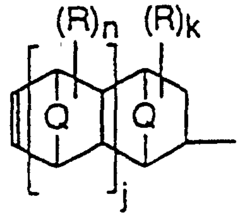

wobei n eine Ganzzahl von 0 bis 5 einschließlich ist, k eine Ganzzahl von 0 bis 3 einschließlich und wobei j eine Ganzzahl zwischen 0 bis 10 einschließlich ist, und

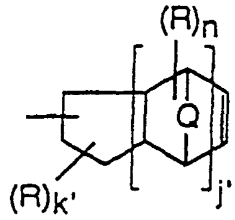

wobei n eine Ganzzahl von 0 bis 5 einschließlich, k- eine Ganzzahl zwischen 0 bis 2 einschließlich und j- eine Ganzzahl von 0 bis 10 einschließlich ist, wobei Q eine $-C(R')_2-$, -O-, -S-, -NR'- oder $-SO_2$-Gruppe darstellt, wobei R' bezeichnend ist für H oder ein Acrylradikal in $C_1$-$C_3$, und wobei R ein Wasserstoffatom oder eine Alkylgruppe in $C_1$-$C_3$ ist.

**10.** Zusammensetzung nach Anspruch 8, **dadurch gekennzeichnet, daß** die polymerisierbaren Gruppierungen des Monomers (B) ausgewählt sind unter den Gruppierungen mit den Gleichungen

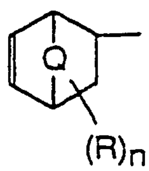

und

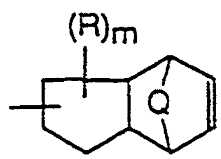

wobei die Radikale R unabhängig voneinander darstellen entweder H oder eine Alkylgruppe in $C_1$-$C_3$, bevorzugt H oder $-CH_3-$, und wobei Q ein divalentes Radikal ist, ausgewählt unter $-C(R')_2-$, -O-, -S-, $-SO_2-$, -NR'-, wobei R' ein Wasserstoffatom oder ein Alkylradikal in $C_1$-$C_3$ ist, bevorzugt $-CH_3-$, wobei Q bevorzugt ein $-CH_2$-Radikal ist, n eine Ganzzahl von 0 bis 5 und m ein Ganzzahl von 0 bis 8 ist.

**11.** Zusammensetzung nach Anspruch 10, **dadurch gekennzeichnet, daß** das Monomer (B) der generellen Formel genügt:

$$Z\{A)_n a \quad \text{(IV)}$$

wobei n[a] eine Ganzzahl von 2 bis 4 ist und wobei A ein Radikal ist, ausgewählt unter den Radikalen mit den Gleichungen

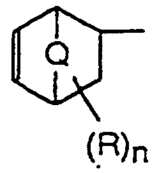

und

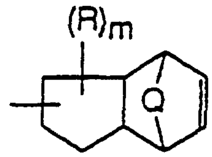

wobei Q, R, m und n der Art sind, wie im Anspruch 10. definiert, und

(**I**) wenn ein $n^a$ = 2 gilt, Z ein divalentes Radikal darstellt, entsprechend der Gleichung:

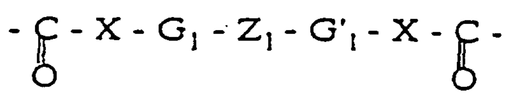 (V),

oder

$$- S - Z_2 - S - \qquad (VI)$$

wobei X repräsentativ ist für -O- oder -S-, wobei $G_1$ und $G'_1$ $-(C_{n'}H_{2n'}-O)_{m'}-$ Gruppen sind, mit n' =1 bis 5, bevorzugt n' = 2 und m' variabel ist zwischen 0 und 10 oder eine Alkylengruppierung in $C_1$-$C_5$; wobei $Z_1$ gewählt ist unter den divalenten Radikalen der Gleichungen

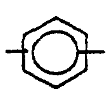 , 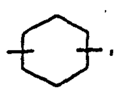 , 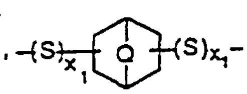 , 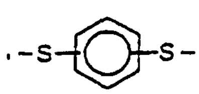 , 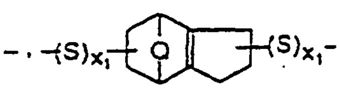 ,

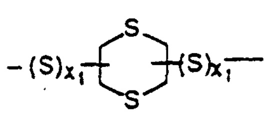 , 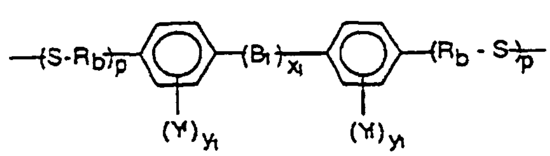 ,

und

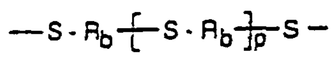 , 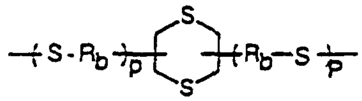

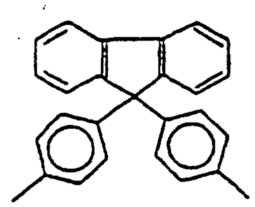

wobei Q wie vorangehend definert ist, $B_1$ repräsentativ ist für $-C(R_2)_2$ - oder -S-, und wobei $R_2$ ein Alkylradikal in $C_1$-$C_3$ ist, bevorzugt $-CH_3$, und wobei $x_1$=0 oder 1 ist, wobei $Y_1$ repräsentativ ist, unabhängig jeweils voneinander für Br, Cl oder H, wobei $y_1$ eine Ganzzahl zwischen 0 und 4 ist, wobei $R_b$ eine $\{CH_2\}_q$ Gruppe ist, wobei q eine Ganzzahl von 1 bis 4 ist, bevorzugt = zu 1 oder 2, und wobei p eine Ganzzahl von 0 bis 4, bevorzugt von 0 bis 2 ist; und

wobei $Z_2$ ein divalentes Radikal ist, ausgewählt unter den Radikalen der Gleichungen:

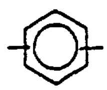 , 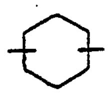 , 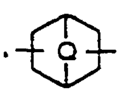 , 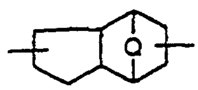 , 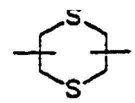 , 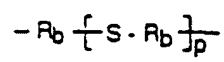

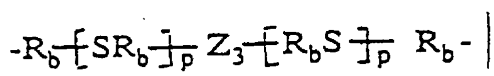

wobei Q, $R_b$ und p definiert sind wie vorangehend und wobei $Z_3$ ein divalentes Radikal ist, ausgewählt unter:

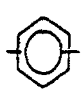 , 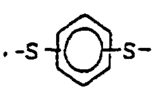 , 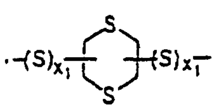 , 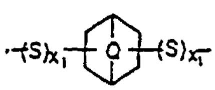 et 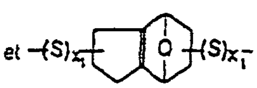

wobei Q und x, wie vorangehend definiert sind;

(**II**) wenn $n^a$=3 gilt, Z repräsentativ ist für ein trivalentes Radikal, ausgewählt unter

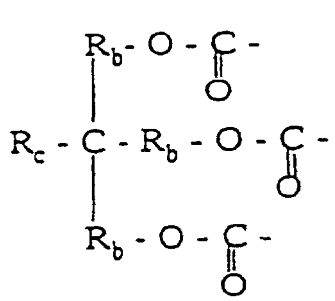 , 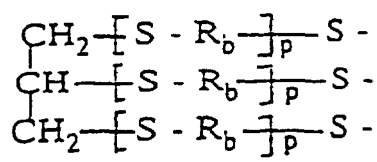

und

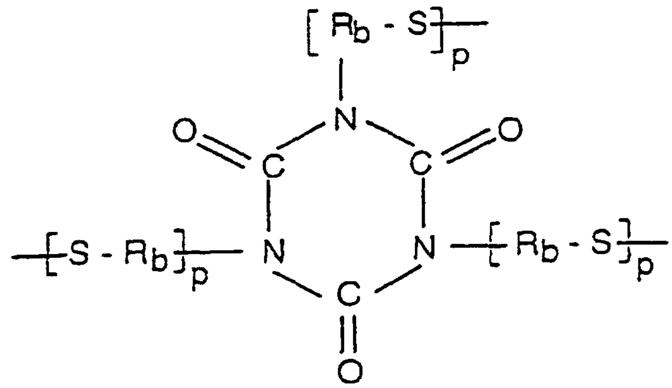

wobei $R_b$ und p definiert sind wie vorangehend, und wobei $R_c$ repräsentativ ist für H oder eine Alkylgruppe in $C_1$-$C_3$, bevorzugt $CH_3$; und

**(III)** wenn $n^a$ = 4 ist, Z repräsentativ ist für ein tetravalentes Radikal, ausgewählt unter den Radikalen:

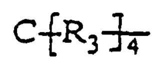

wobei $R_3$ ein Alkylenradikal in $C_1$-$C_5$ oder ein

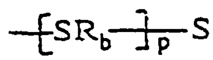

-Radikal ist, wobei $R_b$ und p wie vorangehend definiert sind.

**12.** Zusammensetzung nach Anspruch 11, **dadurch gekennzeichnet, daß** das Monomer (B) zur Gleichung hat:

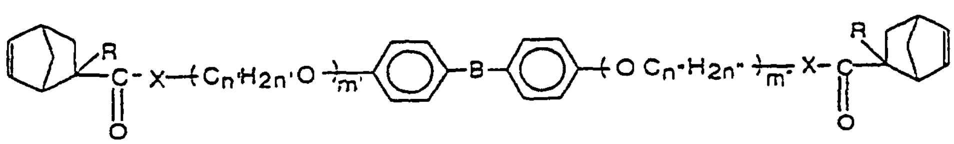

(VII)

wobei X repräsentativ ist für -O- oder -S-, n' und n" = 1-5 sind und wobei m'- und m"- variabel sind zwischen 0 und 10.

**13.** Zusammensetzung nach Anspruch 12, **dadurch gekennzeichnet, daß** das Monomer (B) zur Gleichung hat:

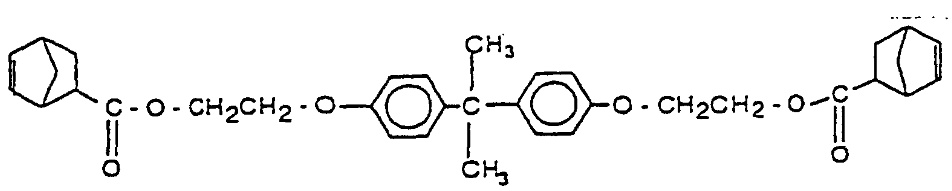

(EBPADN)

**14.** Zusammensetzung nach einem der Ansprüche 1- 6, **dadurch gekennzeichnet, daß** das Monomer (B) zur Gleichung hat

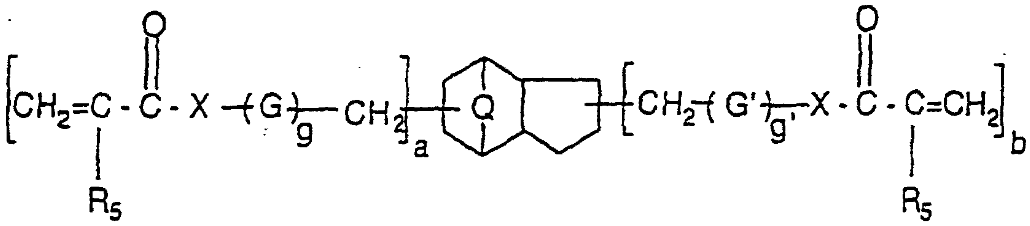 (III)

wobei $R_5$ repräsentativ ist für ein Wasserstoffatom oder eine $CH_3$-Gruppe, wobei X repräsentativ ist für -O- oder -S-, wobei G und G'- eine Gruppe darstellen, entsprechend:

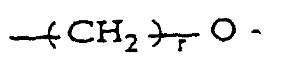 , 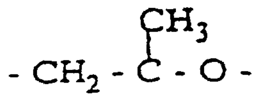 ou 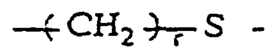

wobei r= 1-4,
wobei Q wie vorangehend definiert ist und wobei a und b gleich sind zu 1 oder 2, und wobei g und g' Variabel sind zwischen 0 und 6.

**15.** Zusammensetzung nach Anspruch 14, **dadurch gekennzeichnet, daß** das Monomer (B) der Gleichung genügt:

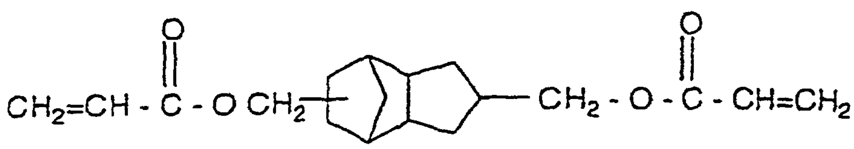 (DCPA)

**16.** Zusammensetzung nach einem der vorangegangenen Ansprüche, **dadurch gekennzeichnet, daß** das Monomer (B) 5 bis 50 Gewichtsprozent, bevorzugt 10 bis 40 Gewichtsprozent mit Bezug auf das Gesamtgewicht an in der Zusammensetzung vorliegenden Monomeren (A) (B) (C) und (D) darstellt.

**17.** Zusammensetzung nach einem der vorangegangenen Ansprüche, **dadurch gekennzeichnet, daß** das Polythiol-Monomer (C) zur Gleichung $R_1\ (SH)_{n1}$ hat, wobei $n^1$ eine Ganzzahl von 2 oder mehr ist, bevorzugt von 2 bis 5, und wobei $R_1$ ein aliphatisches oder aromatisches Radikal ist.

**18.** Zusammensetzung nach Anspruch 15, **dadurch gekennzeichnet, daß** das Polythiol-Monomer (C) 10 bis 60 Gewichtsprozent, bevorzugt 20 bis 50 Gewichtsprozent mit Bezug auf das Gesamtgewicht an in der Zusammensetzung vorhandenen polymerisierbaren Monomeren ausmacht.

**19.** Zusammensetzung nach einem der vorangegangenen Ansprüche, **dadurch gekennzeichnet, daß** die weiteren copolymerisierbaren Monomere (D) ausgewählt sind unter den Monomeren der Gleichung:

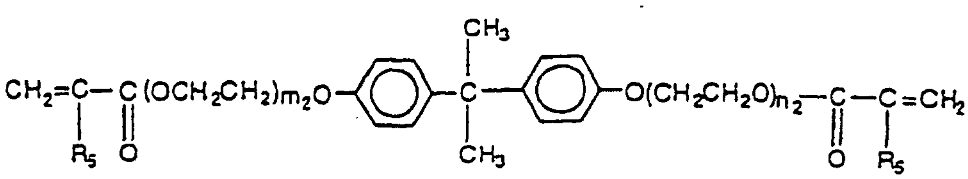

wobei $R_5$ repräsentativ ist für H oder $CH_3$ und wobei $m_2 + n_2$ einen Mittelwert aufweist von 0 bis 20 einschließlich.

**20.** Zusammensetzung nach einem der vorangegangenen Ansprüche, **dadurch gekennzeichnet, daß** oder weiteren copolymerisierbaren Monomere (D) 0 bis 60 Gewichtsprozent, bevorzugt 10 bis 50 Gewichtsprozent der in der

Zusammensetzung vorhandenen polymerisierbaren Monomere ausmachen.

**21.** Optische Linse, erhalten mittels Polymerisation einer Zusammensetzung nach einem der vorangegangenen Ansprüche.

**22.** Optische Linse nach Anspruch 21, **dadurch gekennzeichnet, daß** die Linse eine ophtalmische Linse ist.

**23.** Optische Linse nach Anspruch 22, **dadurch gekennzeichnet, daß** die Linse ein Brillenglas ist.